# EUROPEAN PATENT APPLICATION

(11) **EP 4 513 392 A1**
(43) Date of publication of application: **26.02.2025**
(21) Application number: 23193216.1
(22) Date of filing: 24.08.2023
(51) Int. Cl.: G06N 20/20, G06N 5/01, G01N 21/77, G01N 21/84

(54) **METHOD FOR GENERATING AN OBJECT STATUS CLASSIFIER, METHOD FOR CLASSIFYING THE OBJECT STATUS, MOBILE CLIENT DEVICE FOR OBTAINING A SET OF DATA ASSOCIATED WITH AN OBJECT WHICH STATUS IS TO BE CLASSIFIED, OBJECT STATUS CLASSIFICATION DEVICE, OBJECT STATUS CLASSIFICATION SYSTEM, COMPUTER-READABLE DATA CARRIERS AND DIAGNOSTIC TOOL**

(71) Applicant: SkyLab AG, 1066 Epalinges (CH)
(72) Inventor: Pavlovna, Stepashkina Vitaliia, 127238 MOSCOW (RU); Vilikotskiy Anatoliy, Evgen evich, 109651 MOSCOW (RU)
(74) Representative: Glawe, Delfs, Moll

(57) **Abstract**

The proposed technical solution relates to the field of information technology, more specifically to the field of machine learning, and can be used to classify the state of an object based on the collected features of the object. A special case of the invention is a method for generating an object state classifier performed using a processor of a computer device.

## Description

### FIELD OF INVENTION

The proposed technical solution relates to the field of information technology, more specifically to the field of machine learning, and can be used to classify the state of an object based on the collected features of the object.

### BACKGROUND OF THE INVENTION

A method for assessing the state of the oral cavity is known, described in application US 2015/0038350 A1, published on 05.02.2015 (D1). The method known from D1 for determining the state of the oral cavity in a subject provides for the use of an analytical instrument comprising components: a reagent for measuring one or more parameters reflecting the risk of caries for a test sample collected from the oral cavity, a reagent for measuring one or more parameters reflecting the risk of periodontal diseases for a test sample collected from the oral cavity, and a reagent for measuring one or more parameters reflecting the degree of oral cleanliness for a test sample collected from the oral cavity.

In the method known from D1, the parameters (features) used to classify the state of the oral cavity are acquired in laboratory conditions by dentists, which increases the classification time and does not allow the use of the method in domestic conditions for rapid diagnosis of the state of the oral cavity. In addition, the accuracy of classification by this method is low, mainly due to the fact that a limited set of features is used.

The method known from D1 can be adopted as the closest analogue.

### INVENTION DISCLOSURE

The technical problem solved by the claimed invention is the creation of methods, devices, systems and computer-readable data carriers that do not have the drawbacks of the closest analogue and thus provide rapid classification of the object state, as well as providing increased accuracy in classifying the object state. Another technical problem solved by the claimed invention is the creation of methods, devices, systems and computer-readable data carriers that expand the arsenal of methods for generating classifiers of the object state and their aspects.

The technical result achieved in the implementation of the claimed invention, in addition to the implementation of its purpose, is to eliminate the shortcomings of its analogues and thus increase the speed of classifying the state of the object and increase the accuracy of classifying the state of the object.

The technical result is achieved by providing a method for generating an object state classifier performed using a processor of a computer device, which consists in performing the following steps: a step of collecting a preformed set of data associated with a plurality of individual objects, each object belonging to a group of objects from a plurality of groups of objects, the objects belonging to the same type, the data being unique object identifiers and object features, the features being features of at least two types and indexes obtained on the basis of the said features, a step of generating, based on said preformed set of classifier data associated with a plurality of individual objects based on the random forest method, wherein the number of decision trees provides at least 50, a step of obtaining a set of features and/or combinations of features from said features, comprising only such features and/or such combinations of features that statistically provide prediction accuracy not less than prediction accuracy of said formed classifier based on the random forest method; wherein the generated object state classifier is configured to: when collecting a set of data associated with an object which state is subject to classification, having the same structure, determine the presence of a feature and/or a combination of features in said set of features and/or combinations of features, such feature and/or combination of features being useful for assigning an object which state is to be classified to any said group of objects from a plurality of groups of objects, and when said suitable feature and/or combination of features is not found, assigning said new object to any said group of objects based on a prediction result obtained using said random forest classifier.

### BRIEF DESCRIPTION OF THE DRAWINGS

Illustrative embodiments of the present disclosure are described in detail below with reference to the accompanying drawings, which are incorporated herein by reference, and in which:
Fig. 1 shows by way of example and not limitation an exemplary diagram of a method 100 for generating a state classifier of an object is provided.
Fig. 2 shows by way of example and not limitation an exemplary diagram of a method 200 for obtaining a set of object-associated data and a method 300 for obtaining indices is provided.
Fig. 3 shows by way of example and not limitation an exemplary diagram of a graphical user interface 400.
Fig. 4 shows by way of example and not limitation an exemplary diagram of a diagnostic tool 500 prior to changing the state of the reagent.
Fig. 5 shows by way of example and not limitation an exemplary diagram of a diagnostic tool 500 following a change in the state of a reagent is provided.
Fig. 6 shows by way of example and not limitation an exemplary diagram of a method 600 for classifying a state of an object.
Fig. 7 shows by way of example and not limitation an exemplary diagram of a device 700 for generating a status classifier of an object.
Fig. 8 shows by way of example and not limitation an exemplary diagram of a client device 800.
Fig. 9 shows by way of example and not limitation an exemplary diagram of a device 900 for classifying a state of an object.

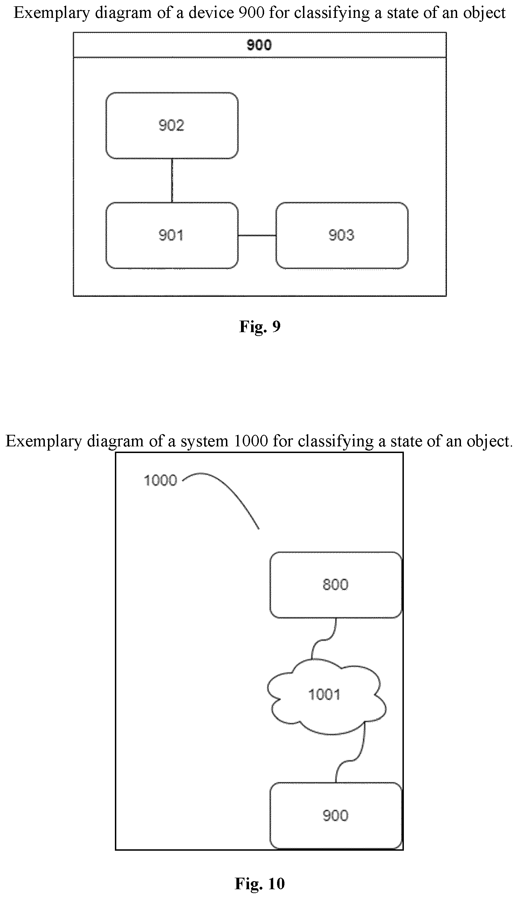

Fig. 9 shows by way of example and not limitation an exemplary diagram of a system 1000 for classifying a state of an object.

### DETAILED DESCRIPTION OF THE INVENTION

In a preferred embodiment of the invention, a method 100 for generating an object state classifier performed using a processor of a computer device, which consists in performing the following steps: a step 101 of collecting a preformed set of data associated with a plurality of individual objects, each object belonging to a group of objects from a plurality of groups of objects, the objects belonging to the same type, the data being unique object identifiers and object features, the features being features of at least two types and indexes obtained on the basis of the said features; a step 102 of generating, based on said preformed set of classifier data associated with a plurality of individual objects based on the random forest method, wherein the number of decision trees provides at least 50; a step 103 of obtaining a set of features and/or combinations of features from said features, comprising only such features and/or such combinations of features that statistically provide prediction accuracy not less than prediction accuracy of said formed classifier based on the random forest method; wherein the generated object state classifier is configured to: when collecting a set of data associated with an object which state is subject to classification, having the same structure, determine the presence of a feature and/or a combination of features in said set of features and/or combinations of features, such feature and/or combination of features being useful for assigning an object which state is to be classified to any said group of objects from a plurality of groups of objects, and when said suitable feature and/or combination of features is not found, assigning said new object to any said group of objects based on a prediction result obtained using said random forest classifier.

In a particular embodiment of the invention, said method is provided, characterized in that a preformed set of data associated with a plurality of objects is collected by performing, using a processor of a computer device, a method 1010 of forming a set of data associated with a plurality of objects, consisting in performing the steps: step 1011 of collecting a plurality of sets of data associated with individual objects, each object being preliminarily assigned to a first group, or to a second group, or to a third group, the objects being of the same kind, the data being object identifiers and object features, wherein a single unique identifier is associated with each object, wherein a plurality of features are associated with each object, wherein the features are features of the first type, features of the second type, the first index, the second index, wherein each said set of data associated with a separate object is a combination of the identifier of this object and features of this object, wherein the features of the first type are data of the current diagnostics of the state of the object, wherein each set of data associated with a separate object contains the same types of features of the first type, wherein the features of the second type are retrospective diagnostics data of the state of the object wherein each set of data associated with the individual object comprises the same types of features of the second type, wherein at least a portion of the features of the second type corresponds to a first contribution value and a second contribution value, wherein the first contribution value is the ratio of the proportion of objects included in the first group with which the feature of the second type is associated to the proportion of objects included in the third group with which the same feature of the second type is associated, wherein the second contribution value is the ratio of the proportion of objects included in the second group with which the feature of the second type is associated to the proportion of objects included in the third group with which the same feature of the second type is associated, the first index for each object is the sum of the first contribution values associated with this object, wherein the second index for each object is the sum of the second contribution values associated with this object; and step 1012 of forming a preformed set of data associated with the plurality of objects by combining the said received sets of data associated with the individual objects.

In a particular embodiment of the invention, any said method is provided, characterized in that further steps are performed by the processor of the computer device: step 1013 of selecting a portion of said features of the second type to collect a sample of said features of the second type, wherein said sample consists of said features of the second type, which can be grouped according to a common feature; step 1014 of obtaining a third index by the processor of the computer learning device performing a classification model or a clustering model on said sample.

In a particular embodiment of the invention, any said method is provided, characterized in that further, by means of the processor of the computer device, a step 1015 of excluding from said plurality of sets of associated with individual data objects said features of the second type that have fallen into said selection of features of the second type is performed.

In a particular embodiment of the invention, any said method is provided, characterized in that, when constructing said classifier based on the random forest method using a processor of a computer device, the steps of the method 1020 for generating a classifier based on the random forest method are performed: step 1021, at which bootstrap is performed for said preformed set of data associated with a plurality of objects, wherein the first random sample of data is formed from said unique identifiers, said first type features, said second type features and said indices, wherein said features and said indices are associated with said objects by corresponding unique identifiers, wherein repetition is allowed; step 1022, at which a decision tree is trained on said formed first random sample of data, wherein during said training, when a node of the decision tree is partitioned, a subsequent random sample of data is formed from said features of the first type, said features of the second type, said indices, wherein the partitioning is carried out until no more than 15% of the total number of parameters that fall into the first formed subsequent sample is left in each node of the tree, wherein when constructing the decision tree, parameters are first determined from said features of the first type, the mentioned features of the second type, the mentioned indices that provide the least entropy at the first partition, wherein the mentioned determination of the parameters providing the least entropy at partition is carried out recursively until the partition is completed; step 1023, which repeatedly provides training of the decision tree until the number of trained decision trees is at least 50; wherein the formed classifier based on the random forest method is configured to: when collecting a new set of data associated with a new object that is not included in the mentioned pre-formed set of data associated with a plurality of individual objects, but having the same structure; assigning the mentioned new object to any mentioned group based on the prediction result, wherein the prediction result is the result of voting of all mentioned decision trees on the assignment of the object to any group.

In a particular embodiment of the invention, any said method is provided, characterized in that the number of trained decisive trees is provided from 400 to 600.

In a particular embodiment of the invention, any said method is provided, characterized in that said set of data associated with the object which state is to be classified is obtained using a mobile client device.

In a particular embodiment of the invention, any said method is provided, characterized in that upon receiving said set of data associated with the object which state is to be classified, using a processor of a mobile client device, a method 200 is performed to collect a set of data associated with the object for classifying the state of this object using the generated object state classifier, the method comprises the following steps performed in any sequence: step 201 of obtaining a unique identifier of the object which state is to be classified, wherein the object which state is to be classified belongs to the same type as the said objects from a preformed set of data associated with the plurality of individual objects; a step 202 of collecting features of an object which state is to be classified, said features including features of at least two types, said features being of the same types as the corresponding features from the preformed set of data associated with the plurality of individual objects; and method 200 comprising the steps of: a step 203 performed after the implementation of the previous steps 201, 202, wherein the collected set of data associated with the object which state is to be classified includes said unique identifier of the object which state is to be classified and features this object is recorded in the memory of the mobile client device; and, either step 204, at which the received set of data associated with the object which state is to be classified is transmitted using the communication link to the memory of the server of the object state classification system and using the processor of the system server to obtain indices based on the features from said new set; or step 205, at which the indices are obtained based on the features from said new set using the processor of the mobile client device.

In a particular embodiment of the invention, any said method is provided, characterized in that when obtaining said indices using said server processor or said processor of the mobile client device, the method 300 for obtaining indices is performed, the method comprises the steps of: a step 301 of selecting at least the first type features and the second type features from said data set associated with the object which state is to be classified; a step 302 of receiving for at least a portion of the collected features from the contribution storage unit the values corresponding to them of the first contribution value and the second contribution value; a step 303 of summing up all the obtained first contribution values to obtain the first index of the object which state is to be classified; a step 304 of summing up all the obtained second contribution values to obtain the second index of the object which state is to be classified; a step 305 of adding the obtained indices to said data set associated with the object which state is to be classified.

In a particular embodiment of the invention, any said method is provided, characterized in that, in addition, using said server processor or said processor of the mobile client device, the following steps are performed: a step 306 of selecting a portion of said features of the second type to obtain a selection of said features of the second type, wherein said selection consists of said features of the second type, which can be grouped according to a common feature; a step 307 of obtaining a third index by performing by said server processor or said processor of the mobile client device a training model of classification or clustering model on said sample; a step 308 of assigning the obtained third index to an object which state is to be classified, and adding the obtained third index to said set of data associated with the object which state is to be classified.

In a particular embodiment of the invention, any said method is provided, characterized in that, in addition, using said processor of the mobile client device, the following steps are performed: a step 309 of selecting a portion of said features of the second type to obtain a sample of said features of the second type, wherein said sample consists of said features of the second type, which can be grouped according to a common feature; a step 310 of obtaining for each said features of the second type from said sample of the logistic regression weights from the logistic regression weight storage unit and forming a third index based on the obtained weights; a step 311 of assigning the obtained third index to an object which state is to be classified, and adding the obtained third index to said set of data associated with the object which state is to be classified.

In a particular embodiment of the invention, any said method is provided, characterized in that further, by means of the processor of the computer device, a step 312 of excluding from said set of data associated with the object which state is to be classified, said features of the second type that have fallen into said selection of features of the second type, is performed.

In a particular embodiment of the invention, any said method is provided, characterized in that, using a processor of a mobile client device, a graphical user interface 400 is generated for obtaining a unique identifier of an object which state is to be classified and features associated with an object which state is to be classified, providing at least: a first means 401 for obtaining at least said unique identifier of an object which state is to be classified using an input device of a mobile client device; a second means 402 for obtaining at least said features of a first type using a photo-video camera of a mobile client device; a third means 403 for obtaining at least said features of a second type using an input device of a mobile client device.

In a particular embodiment of the invention, any said method is provided, characterized in that the first means 401 includes: a user data receiving module 4011 provided by said graphical user interface, configured to provide at least a graphical region 40111 for inputting user data in response to signals generated by said input device and recording the received user data in the memory of the mobile client device; and a module 4012 for generating a unique identifier configured to, in response to recording said user data in said memory: either using a processor of the mobile client device for generating a unique identifier of the object which state is to be classified, based on said recorded user data and recording said generated unique identifier in the memory of the mobile client device; or using a processor and a means of communication of the mobile client device for transmitting said user data to the server of the object state classification system for generating, using the processor of this server, a unique identifier of the object which state is to be classified, and receiving from said server said generated unique identifier and recording said generated unique identifier in the memory of the client device.

In a particular embodiment of the invention, any said method is provided, characterized in that the first means 401 comprises: an authentication module 4013 provided by said graphical user interface, providing at least a graphical region 40131 configured to generate, in response to an interaction signal therewith received from said input device, an authentication signal and using a processor and a communication means of the mobile client device transmitting the generated authentication signal to the authentication server, receiving from said authentication server user data and recording the received user data in the memory of the mobile client device; and a unique identifier generation module 4014 configured to, in response to writing said user data to said memory: either using a processor of the mobile client device to generate a unique identifier of the object which state is to be classified based on said recorded user data and writing said generated unique identifier to the memory of the mobile client device, or using a processor and a communication means of the mobile client device to transmit said user data to a server of the object state classification system to generate, using a processor of this server based on said user data, a unique identifier of the object which state to be classified, and receive from said server said generated unique identifier and record said generated unique identifier in the memory of the mobile client device.

In a particular embodiment of the invention, any said method is provided, characterized in that the second means 402 comprises: a first type feature acquisition module 4021 provided by said graphical user interface, configured to provide at least a graphical region 40211 for generating a signal activating a photo-video camera of the mobile client device, wherein the first type feature acquisition module 4021 is configured to, via said photo-video camera, perform a photo capture of the diagnostic tool 500 and/or perform a video capture of the diagnostic tool 500 to obtain a photo file comprising a photo image of the diagnostic tool 500 and/or a video file comprising a video image of the diagnostic tool 500 and recording said photo file and/or video file in the memory of the mobile client device; and a first type feature extraction module 4022 configured to, in response to the recording of said photo file and/or said video file in said memory: either using a processor of the mobile client recognition device in said photo image and/or in said video image, of at least one marker 501112 associated with at least one feature of the first type, and in response to the recognition of said marker 501112, recording said first type feature associated with said marker 501112; said memory, either using the processor and the communication means of the mobile client device for transmitting said photo image and/or said video image to the server of the object state classification system for recognizing, using the processor of said server, at least one token 501112 associated with at least one feature of the first type, and receiving, from said server, at least one said feature of the first type associated with said token 501112, and recording this received feature of the first type in said memory.

In a particular embodiment, any said method is provided, characterized in that the diagnostic tool 500 is a medium 501 comprising at least one indicator region 5011 that houses an indicator 50111 comprising a reagent 501111 that, when reacted with a fluid, forms said marker 501112 by changing the state of the reagent 501111.

In a particular embodiment of the invention, any said method is provided, characterized in that the liquid medium is a biomaterial, including saliva, and wherein the change in the state of the reagent 501111 is one or a combination of: a change in the color of the reagent 501111, a change in the color intensity of the reagent 501111.

In a particular embodiment of the invention, any said method is provided, characterized in that the third means 403 includes: a second type feature obtaining module 4031 provided by said graphical user interface, configured to: provide a plurality of first graphical regions 40311 for generating a second type feature, each of which, in response to an interaction signal received from said input device, generates a second type feature forming signal, providing at least one second graphical region 40312 for generating a second type feature, configured to input user data in response to signals generated by said input device and configured to, in response to input of user data, generate a second type feature generation signal, each said first graphic region 40311 being associated with one second type feature; wherein the second type feature acquisition module 4031 is configured to, in response to said second type feature generation signal obtained using any of said first graphic regions 40311: or using a processor of a mobile client identification device in a second type feature database associated with a corresponding graphic region 40311, and recording an identified feature of the second type in the memory of the mobile client device, or using a processor and a communication means of the mobile client device for generating a feature identification signal of the second type and transmitting this identification signal to a server of the object state classification system for identification using a processor of this server in a database of features of the second type of the feature of the second type associated with the corresponding graphic region 40311, and receiving from said server said identified feature of the second type and recording this received identified feature of the second type in the memory of the mobile client device; the second type feature acquisition module 4031 is configured, in response to said second type feature generation signal obtained using any of said second graphic regions 40312: either using the processor of the mobile client device to calculate the second type feature and write the calculated second type feature to the memory of the mobile client device, or using the processor and the communication means of the mobile client device to generate the second type feature calculation signal and transmit this calculation signal to the server of the object state classification system for calculating the second type feature using the processor of this server, and receiving from said server of said calculated feature of the second type and recording this obtained calculated feature of the second type in the memory of the mobile client device.

In a particular embodiment of the invention, any said method is provided, characterized in that, after obtaining a unique identifier of the object which state is to be classified, and said features of the first type and features of the second type: either, using the processor of the mobile client device, the said set of data associated with the object which state is to be classified is formed, and the said generated set of data associated with the object which state is to be classified is recorded in the memory of the object's state classification device; or, using the processor and the communication means of the mobile client device, the said identifier and features are transmitted to the server of the object's state classification system and, using the processor of this server, the said set of data associated with the object which state is to be classified is formed, and the said generated set of data associated with the object which state is to be classified is recorded in the memory of the server of the object's state classification system.

In a particular embodiment of the invention, any said method is provided, characterized in that the device for classifying the state of an object is a mobile client device or a server of the system for classifying the state of an object.

In a particular embodiment of the invention, any mentioned method is provided, characterized in that the classification model is based on one of: logistic regression, wherein, when the classification model is a logistic regression, for each of the mentioned features of the second type from the said sample, weights are obtained, on the basis of which the third index is formed, the support vector method, the decision tree method, the random forest method, the naive Bayes classifier, the k-nearest neighbor method, the neural network, the gradient boosting; the clustering model is based on one of: the k-means method, the method of density-based spatial clustering of applications with noise, the hierarchical clustering method, the spectral clustering method.

In a particular embodiment of the invention, any said method is provided, characterized in that when the classification model is a logistic regression, regularization is applied.

In a particular embodiment of the invention, any said method is provided, characterized in that said set of features and/or combinations of features comprising only those features and/or such combinations of features that statistically provide prediction accuracy no less than prediction accuracy of said formed classifier based on the random forest method, when it includes any combination of features suitable for assigning an object which state is to be classified to any said group of objects from a plurality of groups of objects, then such a combination of features includes only features of the first type, only features of the second type, or features of the first type and features of the second type.

In another preferred embodiment of the invention, a method 600 for classifying the state of an object, performed using a processor of a computer device, is provided, which consists in performing the following steps: a step 601 of collecting a set of data associated with an object which state is to be classified by means of any mentioned method 200 and its aspects; a step 602 of classifying an object which state is to be classified to one of a plurality of groups by means of a classifier of the state of the object obtained by any mentioned method 100 and its aspects, each of the plurality of mentioned groups corresponding to one state of the object.

In another preferred embodiment of the invention, a device 700 for generating an object state classifier is provided, comprising at least: a processor 701; a memory 702 comprising program code that, when executed by the processor 701, causes the processor to perform the actions of any of said method 100 and aspects thereof.

In another preferred embodiment of the invention, there is provided a mobile client device 800 for collecting a set of data associated with an object which state is to be classified by a classifier obtained by any of said method 100 and aspects thereof, comprising at least: a processor 801; an input device 802; a photo-video camera 803; a communication means 804; a memory 805 comprising program code which, when executed by the processor 801, causes the processor to perform actions of a method for obtaining a set of data associated with an object which state is to be classified, the method being method 200 or any aspect thereof; an output device 806.

In another preferred embodiment of the invention, a device 900 for classifying the state of an object is provided, comprising at least: a processor 901; a communication means 902; a memory 903 comprising program code that, when executed by the processor 901, causes the processor 901 to perform the actions of the method 600 or some aspect thereof.

In another preferred embodiment of the invention, a system 1000 for classifying the state of an object is provided, comprising at least a mobile client device 800, a server being a device 900, said mobile client device and said server being connected via a communication link 1001.

In other preferred embodiments of the invention, computer-readable storage media are provided comprising program codes that, when executed by a processor of a computer device, cause the processor to perform the actions of any of said methods.

In another preferred embodiment of the invention, a diagnostic tool 500 is provided, which is a medium 501 comprising at least one indicator region 5011 that houses an indicator 50111 comprising a reagent 501111 that, when reacted with a fluid, forms said marker 501112 by changing the state of the reagent 501111.

In another particular embodiment of the invention, a diagnostic tool 500 is provided, characterized in that the liquid medium is a biomaterial, including saliva, and wherein the change in the state of the reagent 501111 is one or a combination of: a change in the color of the reagent 501111, a change in the color intensity of the reagent 501111.

The following are embodiments of the present invention disclosing examples of its implementation in particular embodiments. However, the disclosure itself is not intended to limit the scope of the rights conferred by this patent. Rather, it is to be understood that the claimed invention may also be practiced in other ways in a manner that will include differing elements and conditions or combinations of elements and conditions similar to those described herein, in conjunction with other present and future technologies.

At the same time, it should be obvious to a person skilled in the art with ordinary knowledge, for which the present invention is intended, that, although the following detailed disclosure of the invention demonstrates a particular case of its implementation intended for use in diagnosing the state of the human oral cavity, the claimed invention can be successfully used to diagnose the states of other parts of the human body, and can also be successfully used to diagnose the states of other objects, such as parts of other living organisms, as well as parts of various mechanisms and devices.

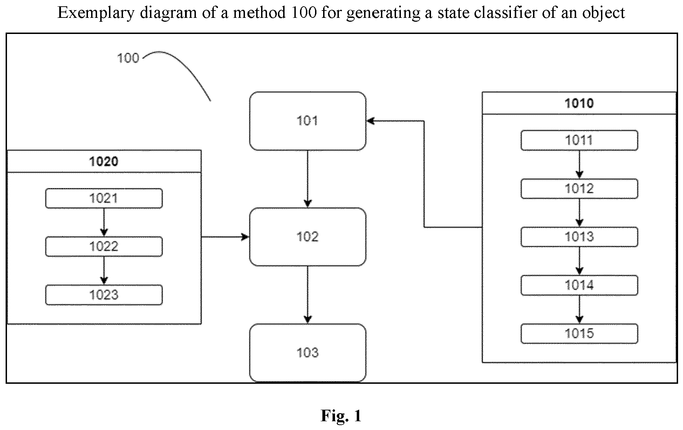

Fig. 1 shows by way of example and not limitation an exemplary diagram of an embodiment of a method 100 for generating an object state classifier performed using a processor of a computer device, which consists in performing the following steps: a step 101 of collecting a preformed set of data associated with a plurality of individual objects, each object belonging to a group of objects from a plurality of groups of objects, the objects belonging to the same type, the data being unique object identifiers and object features, the features being features of at least two types and indexes obtained on the basis of the said features; a step 102 of generating, based on said preformed set of classifier data associated with a plurality of individual objects based on the random forest method, wherein the number of decision trees provides at least 50; a step 103 of obtaining a set of features and/or combinations of features from said features, comprising only such features and/or such combinations of features that statistically provide prediction accuracy not less than prediction accuracy of said formed classifier based on the random forest method; wherein the generated object state classifier is configured to: when collecting a set of data associated with an object which state is subject to classification, having the same structure, determine the presence of a feature and/or a combination of features in said set of features and/or combinations of features, such feature and/or combination of features being useful for assigning an object which state is to be classified to any said group of objects from a plurality of groups of objects, and when said suitable feature and/or combination of features is not found, assigning said new object to any said group of objects based on a prediction result obtained using said random forest classifier. Preferably, but not limited to, a preformed set of data associated with a plurality of objects is collected by performing, using a processor of a computer device, a method 1010 of forming a set of data associated with a plurality of objects, consisting in performing the steps: step 1011 of collecting a plurality of sets of data associated with individual objects, each object being preliminarily assigned to a first group, or to a second group, or to a third group, the objects being of the same kind, the data being object identifiers and object features, wherein a single unique identifier is associated with each object, wherein a plurality of features are associated with each object, wherein the features are features of the first type, features of the second type, the first index, the second index, wherein each said set of data associated with a separate object is a combination of the identifier of this object and features of this object, wherein the features of the first type are data of the current diagnostics of the state of the object, wherein each set of data associated with a separate object contains the same types of features of the first type, wherein the features of the second type are retrospective diagnostics data of the state of the object wherein each set of data associated with the individual object comprises the same types of features of the second type, wherein at least a portion of the features of the second type corresponds to a first contribution value and a second contribution value, wherein the first contribution value is the ratio of the proportion of objects included in the first group with which the feature of the second type is associated to the proportion of objects included in the third group with which the same feature of the second type is associated, wherein the second contribution value is the ratio of the proportion of objects included in the second group with which the feature of the second type is associated to the proportion of objects included in the third group with which the same feature of the second type is associated, the first index for each object is the sum of the first contribution values associated with this object, wherein the second index for each object is the sum of the second contribution values associated with this object; and step 1012 of forming a preformed set of data associated with the plurality of objects by combining the said received sets of data associated with the individual objects. For example, without being limited, the object is a part of the human body, namely the oral cavity. For example, without being limited, the oral cavity can be in one of three states: "there is inflammation", "there is caries", "normal". For example, without being limited, when said preformed set of object-associated data is collected, it is preferable to randomly select a plurality of individuals according to predetermined parameters, for example, without being limited, depending on the age of the individual; each object (each oral cavity) is then assigned a unique object identifier with which said features of the first type and said features of the second type are associated. For example, without being limited, the features of the first type are features of the current diagnosis of the condition of the object (oral cavity); such features are preferably, without being limited, obtained by qualified laboratory analysis or any other method that allows to ensure the required reliability of the data obtained: for example, without being limited, determine the pH level (in units of the pH scale) of saliva obtained from a separate oral cavity; for example, without being limited, determine the total hardness (in mg/l) of saliva obtained from the same oral cavity; for example, without being limited, determine the level of red blood cells (in RBC/µl) in saliva obtained from the same oral cavity; for example, without being limited, the level of leukocytes (in WBC/µl) in saliva obtained from the same oral cavity is determined; for example, without being limited, the total protein (in g/l) in saliva obtained from the same oral cavity is determined; for example, without being limited, the buffer capacity of saliva obtained from the same oral cavity is determined; at the same time, without being limited, the measurement of the total hardness of saliva can be carried out by any method known from the prior art, for example, without limitation, by analyzing the electrolyte balance of the human body by capillary electrophoresis, for example, without limitation, as shown in the article by M.A. Bogdanova "Analysis of the electrolyte balance of the human body by capillary electrophoresis" (Journal Ratio et Nature, 2020, No. 2), which is thus incorporated into this document by reference; however, without being limited, as it was unexpectedly found by the authors, the measurement of the level of erythrocytes in saliva can be carried out, and the measurement of the level of leukocytes in saliva can be carried out, for example, as shown in the instructions for use of the Combur 10 TEST UX (Roche Diagnostics GmbH, Germany), which are hereby incorporated herein by reference, and the methods for measuring the level of erythrocytes in urine, the level of leukocytes in urine can be easily applied and, if necessary, adapted to measure, respectively, the level of erythrocytes in saliva, the level of leukocytes in saliva; at the same time, without being limited, the mentioned features of the first type are obtained for each object (oral cavity) from the mentioned selected objects (oral cavities) by methods known from the prior art, which are accordingly not described in detail; at the same time, without being limited, it is presumed that the features thus obtained of the first type are reliable, that is, they represent accurate data, taking into account the permissible measurement error. For example, without being limited, the features of the second type are retrospective diagnostic data of the condition of the object (oral cavity); such features are, preferably, not limited to observational data on the condition of the object (oral cavity) over a predetermined period of time; such features are, preferably, not limited to being obtained by qualified interrogation or any other method, for example, direct observation or measurement, allowing to ensure the required reliability of the data obtained: for example, not limited, for the oral cavity, the number of times per day the teeth are brushed using a toothpaste is determined; for example, not limited, the amount of time is determined for the same oral cavity in a day spent brushing teeth using a toothpaste; e.g., without limitation, determining for the same oral cavity the type of toothbrush (e.g., without limitation, manual, or mechanized, or sonic, including ultrasonic) used in brushing teeth; e.g., without limitation, determining whether bleeding gums were present at a given time; e.g., without limitation, determining for the same oral cavity the age, weight, and/or body mass index of the individual to whom the oral cavity belongs; and the like; e.g., without limitation, wherein the features of the second type, respectively, unlike the mentioned features of the first type, will be represented by categorical rather than numerical values. At the same time, it should be obvious to a person skilled in the art with ordinary knowledge, for which the present invention is intended, that any other features of the second type can be used, or the mentioned features of the second type can be used in any combination, since it should mainly be assumed that the corresponding set of features of the second type provides the required categorical characteristics of the object; nevertheless, it should be assumed that the same types of features of the first type and the same types of features of the second type are used for each object. For example, without being limited, after receiving the corresponding features of the first type and the second type, they are entered into the corresponding database and associated with the corresponding mentioned unique identifiers of objects, thus forming the primary dataset. For example, without being limited, it is known with the required certainty to which of the three groups the object is assigned, which, for example, is not limited, is determined by the predetermined state of the object; for example, without being limited, the oral cavity can be assigned to the first group if its state is the state "there is inflammation"; for example, without being limited, the oral cavity can be assigned to the second group if its state is the state "there is caries"; for example, without being limited, the oral cavity can be assigned to the third group if its state is the state "normal"; for example, without being limited, the required certainty of attributing the oral cavity to a particular group is provided by a qualified analysis of the oral condition by a specialist. For example, without being limited, at least a portion of the features of the second type are assigned a first contribution value and a second contribution value; wherein, without being limited, the first contribution value is the ratio of the proportion of objects in the first group with which the feature of the second type is associated to the proportion of objects in the third group with which the same feature of the second type is associated; and wherein, without being limited, the second contribution value is the ratio of the proportion of objects in the second group with which the feature of the second type is associated to the proportion of objects in the third group, with which the same feature of the second type is associated; for example, without limitation, for the feature of the second type characterizing the number of times per day when teeth were brushed using toothpaste, the first value of the contribution is the ratio of the share of oral cavities with the "there is inflammation" state in the primary dataset to the share of oral cavities with the "normal" state in the primary dataset; for example, without limitation, for the feature of the second type characterizing the number of times per day when teeth were brushed using toothpaste, the second value of the contribution is the ratio of the share of oral cavities with the "there is caries" in the primary dataset to the fraction of oral cavities with the "normal" state in the primary dataset; and, for example, without limitation, by summing the obtained first contribution values, a first index is formed for each oral cavity and by summing the obtained second contribution values, a second index is formed for each oral cavity, which, accordingly, are associated with the corresponding oral cavity in the dataset. Thus, without being limited, provide a dataset suitable for use in further analysis and suitable for training a classifier thereon. At the same time, without being limited, since the reliability of the data included in it is presumed for the said dataset, the resulting classifier will have a high accuracy of classifying the state of the object on a new set of features. Preferably, without being limited, further steps are performed by the processor of the computer device: step 1013 of selecting a portion of said features of the second type to collect a sample of said features of the second type, wherein said sample consists of said features of the second type, which can be grouped according to a common feature; step 1014 of obtaining a third index by the processor of the computer learning device performing a classification model or a clustering model on said sample. For example, without being limited, when the object is an oral cavity, such features of the second type can be combined according to a common feature of referring them to a particular type of retrospective data for diagnosing the state of the oral cavity; for example, without being limited, such features can be combined according to their effect on oral hygiene. At the same time, for example, without being limited, the classification model is based on one of: logistic regression, wherein, when the classification model is a logistic regression, for each of the mentioned features of the second type from the said sample, weights are obtained, on the basis of which the third index is formed, the support vector method, the decision tree method, the random forest method, the naive Bayes classifier, the k-nearest neighbor method, the neural network, the gradient boosting; the clustering model is based on one of: the k-means method, the method of density-based spatial clustering of applications with noise (DBSCAN), the hierarchical clustering method, the spectral clustering method. In this case, it should mainly be assumed that the selected model should provide the possibility of forming a third index, for example, without being limited, it is preferable to use logistic regression, which allows obtaining the weights of the logistic regression, on the basis of which the third index can be formed; preferably, without being limited, regularization is used. Accordingly, without being limited, the third index can be useful when a part of the features of the second type can be combined according to a common feature; in this case, without being limited, in the future, when training a classifier based on predictions, this will allow using such features of the second type for its training, which in themselves would not have any effect on the prediction, or would have an insufficient effect, which makes it possible to increase the accuracy of predictions, and, consequently, to increase the accuracy of classifying the state of the object. At the same time, without being limited, when the third index is obtained, additionally, by means of the processor of the computer device, the step 1015 of excluding from the said plurality of sets of the said features of the second type associated with individual data objects that have fallen into the said selection of the features of the second type is performed, which, for example, without being limited, further increases the accuracy of the prediction of the said classifier, since it excludes any negative influence of such features of the second type. Thus, without being limited, the method 1010 provides for the formation of a dataset classifier suitable for further analysis and training, which is the said preformed set of data associated with a plurality of individual objects. It should nevertheless be obvious, however, without being limited, to a person skilled in the art having ordinary knowledge, to whom the present invention is intended, that during the operation of the claimed system for classifying the state of an object, individual facts of classifying the state of the object can be validated to confirm the accuracy of classification, whereby the said dataset can be supplemented with new correctly classified objects, which can later be used for re-analysis and re-training of the classifier, which will provide an additional increase in the accuracy of classifying the state of the object, that is, the classifier obtained by the method 100 is a self-learning classifier.

Preferably, without being limited, within said step 102, when constructing said classifier based on the random forest method using a processor of a computer device, the steps of the method 1020 for generating a classifier based on the random forest method are performed: step 1021, at which bootstrap is performed for said preformed set of data associated with a plurality of objects, wherein the first random sample of data is formed from said unique identifiers, said first type features, said second type features and said indices, wherein said features and said indices are associated with said objects by corresponding unique identifiers, wherein repetition is allowed; step 1022, at which a decision tree is trained on said formed first random sample of data, wherein during said training, when a node of the decision tree is partitioned, a subsequent random sample of data is formed from said features of the first type, said features of the second type, said indices, which are therefore parameters, wherein the partitioning is carried out until no more than 15% of the total number of parameters that fall into the first formed subsequent sample is left in each node of the tree, wherein when constructing the decision tree, parameters are first determined from said features of the first type, the mentioned features of the second type, the mentioned indices that provide the least entropy at the first partition, wherein the mentioned determination of the parameters providing the least entropy at partition is carried out recursively until the partition is completed; step 1023, which repeatedly provides training of the decision tree until the number of trained decision trees is at least 50; wherein the formed classifier based on the random forest method is configured to: when collecting a new set of data associated with a new object that is not included in the mentioned pre-formed set of data associated with a plurality of individual objects, but having the same structure; assigning the mentioned new object to any mentioned group based on the prediction result, wherein the prediction result is the result of voting of all mentioned decision trees on the assignment of the object to any group. For example, without being limited, preferably in step 1022, said partitioning is carried out until no more than 2% of the total number of parameters that fall into the first subsequent sample formed are left in each node of the tree. For example, without being limited, the mentioned parameters providing the lowest entropy at the first and corresponding subsequent partitions are those features for which the maximum value of IG (Information Gain) is provided. While it should be apparent to a person skilled in the art having the general knowledge for which the present invention is intended, that the number of trained decision trees depends on the volume of said dataset, it was nevertheless surprisingly found by the inventors of the present invention that the best prediction accuracy is provided by the number of trained trees from 400 to 600. For example, without being limited, receiving said new set of data associated with the new object that is not part of said preformed set of data associated with the plurality of individual objects, but having the same structure, means receiving a set of data associated with the object which state is to be classified. For example, without being limited, when the object which state is to be classified is a new oral cavity that has not previously been assigned to any of these groups, a unique identifier should be obtained for this oral cavity, with which the corresponding features of the first type, features of the second type, indices should be associated, wherein such features of the first type, features of the second type and indices structurally correspond to those features of the first type, features of the second type and indices contained in said dataset, which is used to form a classifier based on the random forest method obtained in method 1020. However, without being limited, the accuracy of the random forest classifier obtained by method 1020 may be estimated by prior art methods and techniques such as, for example, without being limited, an F-measure or a Confusion Matrix, which are accordingly not described in detail below. For example, without being limited, the random forest classifier generated by method 1020 provides at least 90% accuracy in classifying the state of an object. Accordingly, preferably, without being limited, step 103 then provides a set of features and/or combinations of features from said features, comprising only those features and/or combinations of features that statistically provide prediction accuracy no less than the prediction accuracy of said random forest method classifier 1020; for example, without limitation, such features and/or combinations of features can be obtained by known methods and techniques, for example, without limitation, by ROC analysis, which are not described in detail below, respectively. Wherein, for example, without being limited, when the set includes any combination of features suitable for classifying an object which state is to be classified to any mentioned group of objects from a plurality of groups of objects, such a combination of features includes only features of the first type, only features of the second type, or features of the first type and features of the second type. For example, without being limited, a feature that provides classification accuracy no less than the classification accuracy using the said random forest classifier can be a feature of the second type, which characterizes the presence of bleeding gums in the oral cavity at a given time interval, which with an accuracy of about 94% will indicate the correspondence of such an oral cavity to the state "there is inflammation"; for example, without being limited, a combination of features of the second type, indicating the correspondence of the oral cavity to the state "there is caries" with an accuracy of about 98%, can be a combination of features of the second type, characterizing the absence of bleeding of the gums at a given time interval and the presence of a painful reaction to cold food or drinks at a given time interval; for example, not limited to a combination of features of the second type and features of the first type, indicating the compliance of the oral cavity with the state "there is caries" with an accuracy of about 94%, can be a combination of features of the second type, characterizing the absence of bleeding of the gums at a given time interval, the absence of a painful reaction to cold food or drinks at a given time interval, and, either the value of the said second index is greater than or equal to 0.595, taken in combination with the feature of the first type, characterizing the value of the buffer capacity of saliva is less than either equal to 0.211, or the value of the said second index is greater than or equal to 0.595, taken in combination with the feature of the first type, characterizing the pH value of saliva more than 1.45; for example, not limited to the combination of the features of the second type and the index, indicating the compliance of the oral cavity with the "eat caries" state with an accuracy of about 94%, can be a combination of the feature of the second type, characterizing the absence of bleeding gums at a given time interval, and the value of the said second index is greater than or equal to 0.595; for example, without being limited, the combination of the features of the second type and the index, indicating the compliance of the oral cavity with the "normal" state with an accuracy of about 94%, can be a combination of the feature of the second type, characterizing the absence of a painful reaction to cold food or beverages at a given time interval, the feature of the second type, characterizing the absence of bleeding gums at a given time interval, and the value of the third index is less than or equal to 0.167. The features or combinations of features obtained in step 103, which are thus statistical predicates, can be useful for quickly and accurately classifying the state of an object, for example, without being limited, the oral cavity, however, such statistical predicates, although providing high classification accuracy, can nevertheless under no circumstances provide sufficient coverage, that is, it is not guaranteed that any statistical predicate will be found for the set of data associated with the object which state is to be classified, allowing this object to be assigned to any of the mentioned groups with which the corresponding states are associated; preferably, without being limited, such statistical predicates obtained are stored in a statistical predicate database, which is preferably replenished by new statistical predicates that have been validated. Accordingly, preferably, without being limited, the object state classifier formed within the method 100 is configured to: when collecting a set of data associated with an object which state is to be classified, having the same structure, determine the presence of a feature and/or a combination of features in said set of features and/or combinations of features, wherein such feature and/or combination of features are suitable for assigning the object which state is to be classified to any said group of objects from a plurality of groups of objects, and when said suitable feature and/or combination of features are not found, assign said new object to any said group of objects based on the prediction result obtained using said classifier obtained within the method 1020 based on the random forest method. Thus, without being limited, the object state classifier formed by the method 100 provides an accuracy of classifying the state of the object no less than the accuracy of the said classifier obtained in the method 1020 based on the random forest method, and at the same time provides complete coverage, which means that any corresponding new data set will allow classifying the state of the object, for example, the state of the oral cavity with high accuracy of the classifier based on the random forest method.

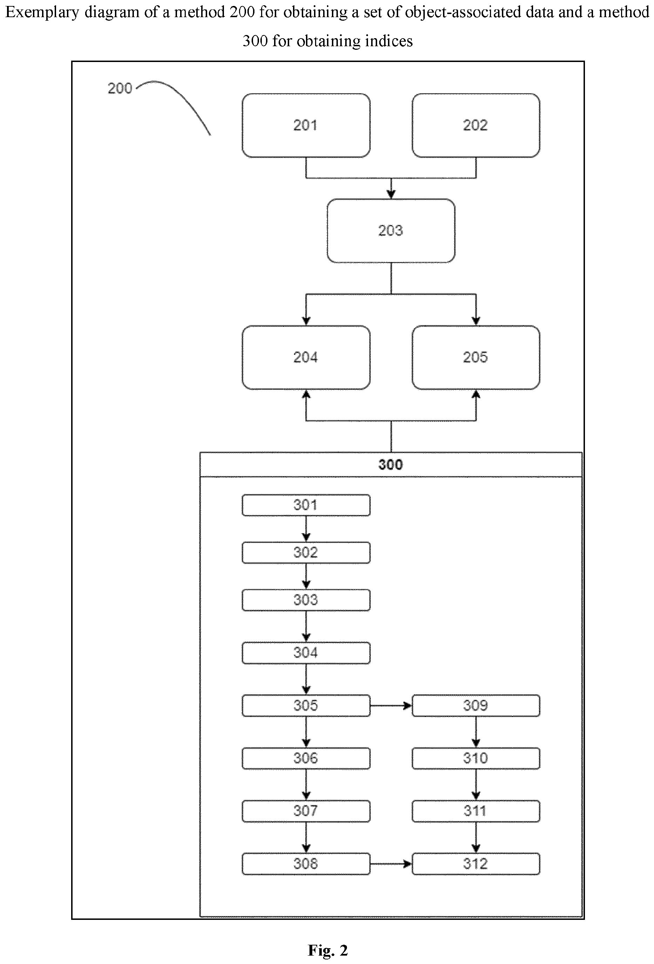

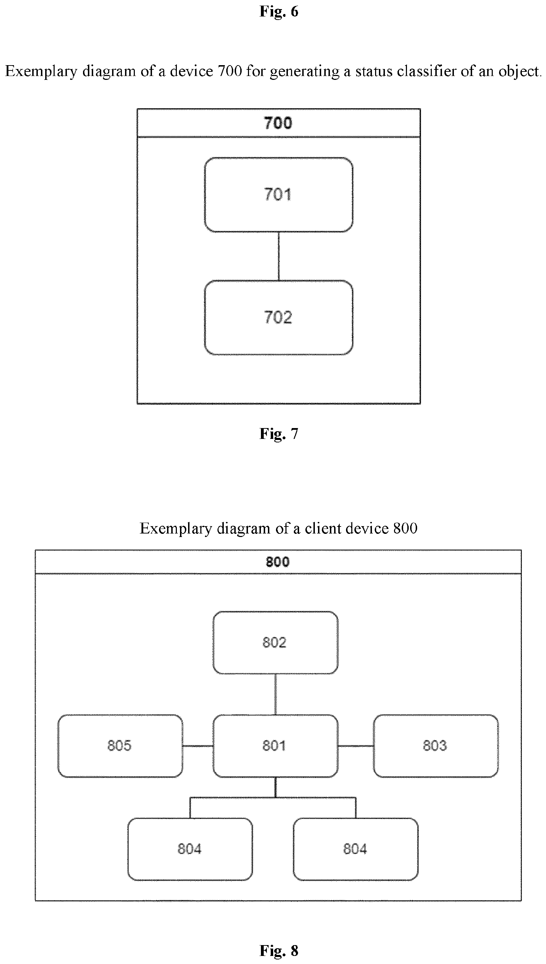

Wherein, without being limited, said set of data associated with the object which state is to be classified is obtained using a mobile client device. For this purpose, preferably, without being limited, as shown in FIG. 2, using the processor of the mobile client device, a method 200 is performed to collect a set of object-associated data for classifying the state of this object using the generated object state classifier, as shown in reference to FIG. 1, such method, preferably, without being limited, comprises the following steps performed in any sequence: step 201 of obtaining a unique identifier of the object which state is to be classified, wherein the object which state is to be classified belongs to the same type as the said objects from a preformed set of data associated with the plurality of individual objects; a step 202 of collecting features of an object which state is to be classified, said features including features of at least two types, said features being of the same types as the corresponding features from the preformed set of data associated with the plurality of individual objects; and method 200 comprising the steps of: a step 203 performed after the implementation of the previous steps 201, 202, wherein the collected set of data associated with the object which state is to be classified includes said unique identifier of the object which state is to be classified and features this object is recorded in the memory of the mobile client device; and, either step 204, at which the received set of data associated with the object which state is to be classified is transmitted using the communication link to the memory of the server of the object state classification system and using the processor of the system server to obtain indices based on the features from said new set; or step 205, at which the indices are obtained based on the features from said new set using the processor of the mobile client device. Preferably, without being limited, said mobile client device is a mobile client device 800, which will be described below with reference to FIG. 8. Accordingly, for example, and without limitation, when it is desired to classify an oral condition, a mobile client device 800 may be used to obtain a unique oral identifier by which said features of the first type, features of the second type may be associated with said oral cavity and indices may be obtained, which may then be associated with said oral cavity. Preferably, without being limited, when obtaining said indices using said server processor or said processor of the mobile client device 800, a method 300 for obtaining the indices is performed, the method 300 comprising the steps of: a step 301 of selecting at least first type features and second type features from said data set associated with an object which state is to be classified; a step 302 of obtaining for at least a portion of the obtained features from a contribution storage unit the contribution values corresponding thereto a first contribution value and a second contribution value; a step 303 of summing up all the obtained first contribution values to obtain a first index of the object which state is to be classified; a step 304 of summing up all the obtained second contribution values to obtain a second index of the object which state is to be classified; a step 305 of adding the obtained indices to said set of data associated with the object which state is to be classified; wherein, for example, without being limited, said contribution value storage unit is implemented in the memory of said device 800 or in the memory of said server and is a database of contribution values storing first contribution values and second contribution values to obtain them in response to a signal, generated by a processor of a computer device (server, mobile client device). For example, without being limited, after associating, at step 305, the obtained indices with an object which state is to be classified, further using said server processor or said processor of the mobile client device 800, it is possible to perform steps: step 306 of extracting a portion of said features of the second type to obtain a selection of said features of the second type, said selection consisting of said features of the second type, which can be grouped according to a common feature; step 307 of obtaining a third index by performing, by said server processor or said processor of the mobile client device, a classification model or a clustering model on said sampling; step 308 of assigning the obtained third index to the object which state is to be classified, and adding the obtained third index to said set of data associated with the object which state is to be classified; wherein, without limitation, alternatively, using said processor of the mobile client device 800, it is possible to perform steps: step 309 of selecting a portion of said features of the second type to obtain a sample of said features of the second type, wherein said sample consists of said features of the second type, which can be grouped according to a common feature; step 310 of obtaining for each said features of the second type from said sampling of the logistic regression weights from the logistic regression weight storage unit and generating a third index based on the obtained weights; step 311 of assigning the obtained third index to the object which state is to be classified and adding the obtained third index to said set of data associated with the object which state is to be classified; wherein, for example, without limitation, said contribution coefficient data storage unit is implemented in the memory of said device 800 or in the memory of said server and is a logistic regression weight database storing the logistic regression weights to obtain them in response to a signal generated by a processor of a computer device (server, mobile client device). For example, without being limited, upon completion of those previously described with reference to FIGS. 2 steps of the method 300 may further enable step 312 to exclude from said set of data associated with the object which state is to be classified, said features of the second type that have fallen into said selection of features of the second type. At the same time, it should be obvious to a person skilled in the art with ordinary knowledge, for which the present invention is designed, that depending on the structures of the datasets from the said preformed dataset, only such steps of the method 300 should be provided that for the newly obtained dataset ensure its compliance with the datasets from the said preformed dataset, since otherwise, the result of classification using the classifier obtained in the framework of the method 1020 based on the random forest method will not have the required accuracy, or for such an inappropriate dataset, the use of the said classifier based on the random forest method may not be possible at all.

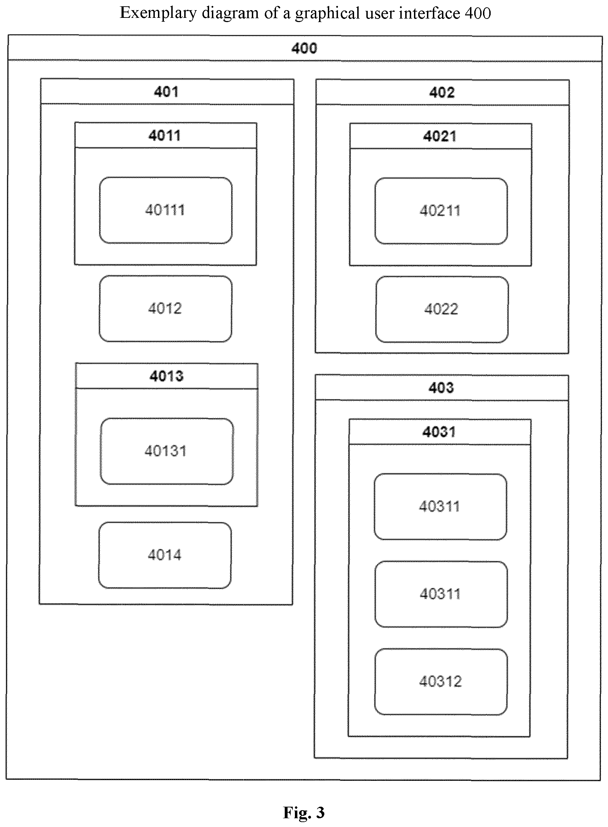

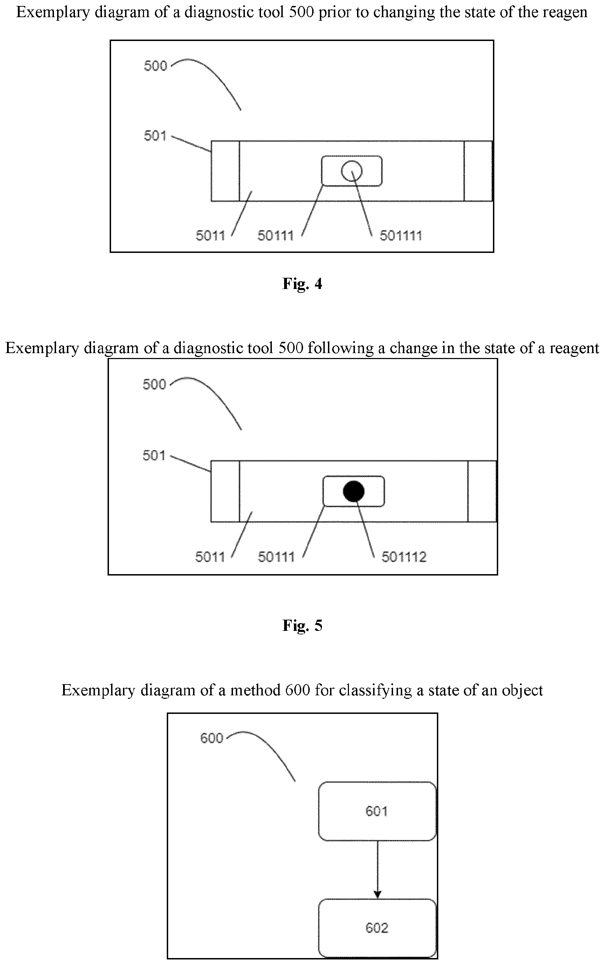

However, preferably, the mobile client device 800 provides, using its processor 801, generation of the FIGS. 3 of the graphical user interface 400 is generated for obtaining a unique identifier of an object which state is to be classified and features associated with an object which state is to be classified, providing at least: a first means 401 for obtaining at least said unique identifier of an object which state is to be classified using an input device 802 of a mobile client device 800; a second means 402 for obtaining at least said features of a first type using a photo-video camera 803 of a mobile client device 800; a third means 403 for obtaining at least said features of a second type using an input device of a mobile client device. Preferably, without being limited, the first means 401 includes: a user data receiving module 4011 provided by said graphical user interface, configured to provide at least a graphical region 40111 for inputting user data in response to signals generated by said input device 802 and recording the received user data in the memory 805 of the mobile client device 800; and a module 4012 for generating a unique identifier configured to, in response to recording said user data in said memory 805: either using a processor 801 of the mobile client device for generating a unique identifier of the object which state is to be classified, based on said recorded user data and recording said generated unique identifier in the memory 805 of the mobile client device 800; or using a processor 801 and a means of communication 804 of the mobile client device 800 for transmitting said user data to the server of the object state classification system for generating, using the processor of this server, a unique identifier of the object which state is to be classified, and receiving from said server said generated unique identifier and recording said generated unique identifier in the memory 805 of the client device 800. Wherein, without being limited, alternatively or additionally, the first means 401 comprises: an authentication module 4013 provided by said graphical user interface, providing at least a graphical region 40131 configured to generate, in response to an interaction signal therewith received from said input device 802, an authentication signal and using a processor 801 and a communication means 804 of the mobile client device 800 transmitting the generated authentication signal to the authentication server, which may be implemented on said server of object state classification system 1000, receiving from said authentication server user data and recording the received user data in the memory 805 of the mobile client device 800; and a unique identifier generation module 4014 configured to, in response to writing said user data to said memory 805: either using a processor 801 of the mobile client device 800 to generate a unique identifier of the object which state is to be classified based on said recorded user data and writing said generated unique identifier to the memory 805 of the mobile client device 800, or using a processor 801 and a communication means 804 of the mobile client device 800 to transmit said user data to a server of the object state classification system 1000 to generate, using a processor of this server based on said user data, a unique identifier of the object which state to be classified, and receive from said server said generated unique identifier and record said generated unique identifier in the memory 805 of the mobile client device 800. For example, without being limited, when the object which condition is to be classified is the oral cavity, said user data may be data such as, but not limited to, the user's name, his e-mail address, the subscriber number of the user in the cellular operator's network, any user identifier in the authentication system of the authentication provider, other personal data of the user, biometric data of the user and the like, as well as any data that allows calculating said feature of the second type, for example, without being limited, gender, height, age, weight of the user, allowing calculating and interpreting the user's body mass index. For example, without being limited, the general process of generating said unique object identifier is as follows: in a first step, the user, through the input device 802, activates a program (application) which code is stored in the memory of the device 800 and which, when executed by the processor 801 of the mobile device 800, generates a graphical user interface providing said module 401, which provides a representation on the user's screen of a graphical region 40111 for inputting user data for registering the user in the system 1000 and/or the graphical region 40131 for inputting user data (e.g., without being limited, any user identifier and user password) and subsequent user authentication in the system 1000, including by means of an external authentication system provided by the authentication provider; after obtaining the necessary user data, in a second step, a unique object identifier is generated, the state of which is to be classified, and this unique identifier is recorded at least in the memory 805 of the mobile client device, and can subsequently be transmitted to the memory of the server of the system 1000. Preferably, without being limited, said second means 402 comprises: a first-type feature acquisition module 4021 provided by said graphical user interface, configured to provide at least a graphical region 40211 for generating a signal activating the photo-video camera 803 of the mobile client device, wherein the first-type feature acquisition module 4021 is configured to take photos of the diagnostic tool 500 via said photo-video camera 803, which will be described in detail below with reference to FIG. 4 and 5 and/or video capture of the diagnostic tool 500 to obtain a photo file comprising a photo image of the diagnostic tool 500 and/or a video file comprising a video image of the diagnostic tool 500 and write said photo file and/or video file to the memory 805 of the mobile client device 800; and a first type feature extraction module 4022 configured in response to writing said photo file and/or said video file to said memory 805: either using a processor 801 of the mobile client recognition device in said photo image and/or in said video image at least, one marker 501112 associated with at least one feature of the first type, and in response to the recognition of the said marker 501112, recording the said feature of the first type associated with this marker 501112 in the said memory, either using the processor 801 and the communication means of the mobile client device 804 transmitting the said photo image and/or the said video image to the server of the object state classification system 1000 for recognition using the processor of this server of at least one said marker 501112 and receiving from the said server at least one said feature of the first type associated with said marker 501112, and recording this received feature of the first type in said memory 805. For example, without being limited, in general, the process of obtaining the features of the first type is as follows: in the first step, the user, through the components of the kit for obtaining the features of the first type, activates the indicators on the diagnostic tool 500, for example, without being limited, collecting saliva in the container provided as part of the kit, collecting the collected saliva by pipette and applying saliva to the indicator areas 5011 of the diagnostic tool 500, which leads to a chemical reaction of reagents 501111, which, upon completion of the reaction, thus become markers 501112; in the second step, the user, through the said graphic the area 40211 activates a photo and video camera 803 of the device 800, by means of which a photo or video capture of the diagnostic tool with markers 501112 is performed and a photo file with a photo image of such diagnostic tool 500 or a video file with a video image of such diagnostic tool 500 is formed using the processor 801 of the mobile client device 800, which are at least recorded in the memory 805; at the third stage, recognition of the marker 501112 and recording of the data associated with this marker 501112 is provided by the processor 801 or by the processor of the server of the system 1000, at least in the memory 805 or in the memory of the said server, and then in the database of the first type feature data, a suitable first type feature is searched in a first type feature database stored, for example but not limited to, in the memory 805 or in the memory of said system server 1000, which may be associated with said token 501112 and, when such first type feature is found, such feature is at least written to the memory 805. Preferably, without being limited, the third means 403 includes: a second type feature obtaining module 4031 provided by said graphical user interface, configured to: provide a plurality of first graphical regions 40311 for generating a second type feature, each of which, in response to an interaction signal received from said input device 802, generates a second type feature forming signal, providing at least one second graphical region 40312 for generating a second type feature, configured to input user data in response to signals generated by said input device 802 and configured to, in response to input of user data, generate a second type feature generation signal, each said first graphic region 40311 being associated with one second type feature; wherein the second type feature acquisition module 4031 is configured to, in response to said second type feature generation signal obtained using any of said first graphic regions 40311: or using a processor 801 of a mobile client identification device 800 in a second type feature database associated with a corresponding graphic region 40311, and recording an identified feature of the second type in the memory 805 of the mobile client device 800, or using a processor 801 and a communication means 804 of the mobile client device 800 for generating a feature identification signal of the second type and transmitting this identification signal to a server of the object state classification system 1000 for identification using a processor of this server in a database of features of the second type of the feature of the second type associated with the corresponding graphic region 40311, and receiving from said server said identified feature of the second type and recording this received identified feature of the second type in the memory 805 of the mobile client device 800; the second type feature acquisition module 4031 is configured, in response to said second type feature generation signal obtained using any of said second graphic regions 40312: either using the processor 801 of the mobile client device 800 to calculate the second type feature and write the calculated second type feature to the memory 805 of the mobile client device, or using the processor 801 and the communication means 804 of the mobile client device 800 to generate the second type feature calculation signal and transmit this calculation signal to the server of the object state classification system 1000 for calculating the second type feature using the processor of this server, and receiving from said server of said calculated feature of the second type and recording this obtained calculated feature of the second type in the memory 805 of the mobile client device 800. For example, and without limitation, the graphic regions 40311 are graphic regions containing textual information on the basis of which the user may select a particular region 40311 for interaction, and the graphic region 40312 provides the ability to input or select user data. For example, without being limited, in a general way, the process of obtaining the features of the second type is as follows: at the first stage, by means of the graphical interface 400 generated by the processor 801, the user is provided with a plurality of graphic areas 40311 and at least one graphic area 40312; while, based on the text information placed in the graphic areas 40311, it is possible for the user to interact with a suitable graphic area 40311 by means of an input device 802, through which it is also possible to enter user data, for example, the user's weight, using the graphic area 40312; then, when the user interacts with all suitable graphic regions 40311 via the input device 802 and, when all necessary user data is entered, a second type feature database stored, for example but not limited to, in the memory 805 or in the memory of said server of the system 1000, respectively, the processor 801 or the processor of said server searches for the corresponding second type features associated with the graphic regions 40311 interacted with via the input device 802, and wherein, without limitation, the processor 801 or the processor of said server calculates the second type feature based on the obtained using the device input 802 of user data; then the features of the second type thus obtained are written, at least, to the memory 805. At the same time, without being limited, after obtaining a unique identifier of the object which state is to be classified and the mentioned features of the first type and features of the second type: either using the processor 801 of the mobile client device 800, the said set of data associated with the object which state is to be classified is formed, and the said generated set of data associated with the object which state is to be classified is recorded in the memory 805 of the object's state classification device, which may be, for example, not limited to the device 800 or the said server of the system 1000; or using the processor 801 and the means of communication 804 of the mobile client device 800, the said identifier and features are transmitted to the server of the object's state classification system 1000 and using the processor of this server, the said set of data associated with the object which state is to be classified is formed, and the said generated set of data associated with the object which state is to be classified is recorded in the memory of the server of the object's state classification system; while, without being limited, the data set thus obtained is also provided with the said indices.

Preferably, however, without being limited, as shown in FIG. 4, said diagnostic tool 500 is provided, which is a medium 501 comprising at least one indicator region 5011 that houses an indicator 50111 comprising a reagent 501111 that, when reacted with a fluid, forms said marker 501112 by changing the state of the reagent 501111, as shown, without being limited, in FIG. 5. Wherein, for example, without being limited, preferably, without being limited, when the object which state is to be classified is the oral cavity, said liquid material is a biomaterial, namely, the saliva of the user; and wherein, without being limited, the change in the state of the reagent 501111 is one or a combination of: a change in the color of the reagent 501111, a change in the color intensity of the reagent 501111. Most typically, without being limited, said carrier is a strip of, for example, without being limited, a polymeric material on which indicator regions are placed, for example, without being limited, a complex of membranes of polymeric materials forming indicators 50111 impregnated with various chemical reagents 501111, which may also be mixtures of substances. The indicator regions are, for example, without being limited, fixed to said carrier by means of an adhesive or a coating material, for example, a surface mesh, for example, without being limited, a nylon mesh; moreover, without being limited, a reagent-free absorbent layer can also be provided, placed between the carrier 501 and the indicator region 5011; moreover, without being limited, to prevent false negative results when determining the level of hemoglobin directly under said surface mesh, a mesh impregnated with iodate (salts of iodic acid) can be placed. For example, without being limited, the saliva pH indicator may comprise a mixture of Bromthymol blue and Methyl red reagents, or Bromoxylenol blue sodium salt reagents; for example, without being limited, the saliva total hardness indicator may comprise a mixture of Eriochrome Black T and Sodium tetraborate reagents; for example, without being limited, the saliva RBC indicator (in RBC/µL) may comprise o-Tolidine reagents in combination with hydrogen peroxide, or Cumen hydroperoxide (also known as CHP), 3,3'-5,5'-Tetramethylbenzidine (also known as TMBZ), or Tetramethylbenzidine cumene hydroperoxide; for example, without being limited, the indicator for determining the level of leukocytes (in WBC/µL) in saliva may contain the reagents 4,4'-Bi[2-methoxybenzenediazonium] tetrachlorozincate, a-Naphthyl acetate or 3-(N-Toluenesulfonyl- -L-alanyloxy) indole (also known as TAI), 2-methoxy-4-(N-morpholino-benziazonium (also known as MMB), or the Indoxylcarbonic acid ester Diazonium salt; for example, without being limited, the indicator for determining; levels of total protein in saliva may contain the reagents Tetrabromophenol blue (also known as TBPB) in acidic buffer, or 2,4,5,7-tetraiodo-3,6-dihydroxanthene-9-spiro-1'-(4',5',6',7'- tetrachloro-3 'H-isobenzofuran-3'-one disodium (2,4,5,7-Tetraiodo-3,6-dihydroxyxanthene-9-spiro-1 '-(4',5 ',6' ,7 '-tetrachlror-3' H-isobenzofuran-3 '-one disodium, also known as TCTIF), or Tetrachlorophenolphatinale ester tetrabromphenol blue; for example, without being limited, the indicator for determining the saliva buffer capacity may contain the mixture of reagents from Bromoxylenol blue and Methyl red, or reagent Bromoxylenol blue sodium salt. At the same time, it should be obvious to a person skilled in the art with ordinary knowledge, for which the present invention is intended, that the aforementioned reagents can be represented by any other reagents known or obtained in the future, which provide at least a change in the color of the reagent 501111, a change in the color intensity of the reagent 501111, which can be recognized using the camera 803 of the mobile client device 800 and the aforementioned module 4022. In this case, preferably, without being limited, the supplied kit for obtaining the features of the first type may include, in addition to the said diagnostic tool, also any container for collecting liquid material, including biomaterial, including saliva, and a pipette for sampling the collected liquid material and applying it to the indicator areas.

Thus, preferably, without being limited, as shown in FIG. 6, a method 600 for classifying the state of an object, performed using a processor of a computer device, which may thus be said device 800 or said system server 1000, may be provided, which consists in performing the following steps: a step 601 of collecting a set of data associated with an object which state is to be classified by means of any mentioned method 200 and its aspects; a step 602 of classifying an object which state is to be classified to one of a plurality of groups by means of a classifier of the state of the object obtained by any mentioned method 100 and its aspects, each of the plurality of mentioned groups corresponding to one state of the object. For example, without being limiting, the state of oral cavity of the user may be classified quickly and accurately, as no visit to a dentist is required and all actions may be performed by the user using the first type feature kit and the mobile client device 800, which may be, for example, without being limited, a smartphone, or a tablet computer, or the like. In this case, for example, without being limited, the classified state of the object can be stored, for example, without being limited, in the memory of the server of the system 1000, after which, through the server processor, a set of recommendations for the user to change the state of the object, a schedule of measures to change the state of the object can be formed, and also marketing information can be formed, for example, without being limited, on the basis of which a recommendation for the acquisition and use of any product can be formed.

Thus, preferably, without being limited, as shown in FIG. 7, a device 700 for generating an object state classifier may be provided, comprising at least: a processor 701; a memory 702 comprising program code that, when executed by the processor 701, causes the processor to perform the actions of any of the above methods described with reference to FIGS. 1-5. Thus, preferably, without being limited, as shown in FIG. 8, a mobile client device 800 may be provided to collect a set of data associated with an object which state is to be classified by a classifier obtained by any of the said methods described with reference to FIGS. 1-5, comprising at least: a processor 801; an input device 802; a photo-video camera 803; a communication means 804; a memory 805 comprising program code that, when executed by the processor 801, causes the processor to perform actions of a method for obtaining a set of data associated with an object which state is to be classified, the method being any of the said methods described with reference to FIGS. 2-5; an output device 806. Thus, preferably, without being limited, as shown in FIG. 9, an object state classification device 900 may be provided, for example, being a server of the object state classification system 1000, or, for example, being a mobile client device 800, comprising at least: a processor 901; a communication means 902; a memory 903 comprising program code that, when executed by the processor, causes the processor 901 to perform the actions of the method 600 referred to in FIG. 6 or any aspect thereof. Finally, without being limited, as shown in FIG. 10, a system 1000 for classifying the state of an object may be provided, comprising at least a mobile client device 800, a server being a device 900, said mobile client device and said server being connected via a communication link 1001.

Preferably, without being limited, the most typically mentioned computer device, which may be, for example, without being limited, the device 700, the device 800, the device 900, the server, is a computer device comprising at least a processor 701, 801, 901 and a memory 702, 805, 903. However, for example, without being limited, when the computer device is a mobile client device 800, such mobile client device 800 also includes, without being limited, an input device 802, a camera 803, a communication means 804. However, without being limited, when the computer device is a device 900 for classifying a state of an object, the device 900 for classifying a state of an object also includes a communication means 902. However, without being limited, the memory 702, 805, 903 (computer-readable storage medium) may comprise any program code or set of program codes that, when executed by the processor 701, 801, 901, cause the respective processor 701, 801, 901 to perform the actions of any suitable method previously described with reference to FIGS. 1-6. By way of example, without being limited, a computer-readable storage medium (memory 702, 805, 903) may include non-volatile memory (NVRAM); random access memory (RAM); read-only memory (ROM); electrically erasable programmable read-only memory (EEPROM); flash memory or other memory technologies; CDROM, digital versatile disk (DVD), or other optical or holographic storage media; magnetic cassettes, magnetic tape, magnetic disk storage, or other magnetic storage devices; and any other storage medium that may be used to store and encode the desired information. Wherein, without being limited, the memory 702, 805, 903 includes a storage medium based on a computer memory in the form of volatile or non-volatile memory, or a combination thereof. However, exemplary hardware devices include, without being limited, solid-state memory, hard disk drives, optical disk drives, and so forth. However, without being limited, the computer-readable storage medium (memory 702, 805, 903) is non-transitory (permanent, non-transitive) such that it does not include a transient propagating signal. However, without being limited, the memory 702, 805, 903 may store an exemplary environment in which computer instructions or codes stored in the memory 702, 805, 903 may be used to perform the procedures of any suitable method previously described with reference to FIGS. 1-6. However, without being limited, each of the devices 700, 800, 900 includes one or more processors 701, 801, 901 that are configured to execute computer instructions or codes stored in the memory 702, 805, 903 to enable the execution of the procedures of any suitable method previously described with reference to FIGS. 1-6. At the same time, without being limited, any database (DB) can also be implemented in the memory 702, 805, 903. The database may be, without being limited: a hierarchical database, a network database, a relational database, an object database, an object-oriented database, an object-relational database, a spatial database, a combination of the two or more databases listed, and the like. Wherein, without being limited, the database stores the data necessary to perform the procedures of any suitable method previously described with reference to FIGS. 1-6, and the database may be accessed using the communication means 804, 902 via the communication link 1001. Wherein, without being limited, the processor 701, 801, 901 is an electronic device that most typically provides control of the components of the computer device through the generated electronic signals, and also provides calculations, and which most typically, depending on the desired function, can be both a central processing unit (CPU) and a graphics processing unit (GPU), which can be involved in various stages of performing the procedures of any suitable method previously described with reference to FIGS. 1-6; preferably, without being limited, the processor 701, 801, 901 may include external or embedded additional specialized electronic devices (chips) that may be designed to, for example, but not limited to, process images, or to process machine learning tasks. Wherein, without being limited, said device 800 is, without being limited, a personal computer, a laptop computer, a tablet computer, a handheld computer, a smartphone, a phablet, a wearable user device, such as, for example, without being limited, a smartwatch or smart glasses, and the like, and thus necessarily comprises an input device 802, which thus can be, for example, without being limited, a touchscreen, a touchpad, a trackball, a trackpad, a keyboard, a mouse, and the like, allowing the user to interact with the elements of the graphical user interface 400; necessarily comprises an output device 806, such as a display, including a touch screen, providing a display of user information and a visual representation of the generated graphical user interface; and necessarily includes a means of communication 804, which most typically, like the means of communication 902, is any transceiver, including a modem, transmitter, receiver, transceiver, and the like, providing, if necessary, communication of the device with other devices, including the system 1000, including through the server of the system 1000 and its means of communication; while, without being limited, the above-mentioned means of communication can also be integrated into the processor 701, 801, 901 or coupled thereto, thus being a dedicated communication device (chip) of the processor 701, 801, 901. At the same time, without being limited, the server of the system 1000, in addition to the previously described functions, can provide regulation of data exchange in the system 1000. However, without being limited, communication within the system 1000 is facilitated by one or more communication links 1001, which are most typically data networks. Wherein, without being limited, the communication networks may include, but are not limited to, one or more local area networks (LAN) and/or wide area networks (WAN), or may be the information and telecommunications network Internet, or Intranet, or virtual private network (VPN), or a combination thereof, and the like. However, without being limited, the server of the system 1000 is also capable of providing a virtual computing environment for interoperability between components of the system 1000. Wherein, without being limited, any said mobile client device 800 may be said server of the system 1000 and have its inherent functions, in which case the system 1000 by means of communication means 804 may be connected to said other devices 700, 800, 900 using any data network or directly via a wireless communication line, which may be, but is not limited to, a radio communication line, an acoustic communication line, an infrared communication line, a laser communication line and the like, in which case said databases may be implemented directly in said memory 805 of the mobile client device 800. Most typically, without being limited, the camera 804 is an optical device for recording and/or transmitting an image, whether still or moving, such as a camera, or a camera, or a movie camera, or a television camera, or a video camera, and is a set of hardware, such as, without being limited, a sensor including a light-sensitive sensor and an aperture lens system, a stabilization system, an autofocus system, and the like; preferably, without being limited, the camera 804 is controlled by electronic signals from the processor 801, which may thus include, without being limited, an integrated or external specialized image processing chip. Most typically, without being limited, the components of the devices 700, 800, 900 are interconnected, including via a data bus.

The present description of the implementation of the claimed invention demonstrates only particular embodiments and does not limit other embodiments of the claimed invention, since possible other alternative embodiments of the claimed invention, which do not go beyond the scope of the information set forth in this application, should be obvious to a person skilled in the art having the usual qualifications for which the claimed invention is intended. Preferred embodiments of the invention are specified as per items 1-82 below.
1. A method for generating an object state classifier performed using a processor of a computer device, the method comprising performing the steps of:
   a step of obtaining a preformed set of data associated with a plurality of individual objects,
   wherein each object belongs to a group of objects from a plurality of groups of objects, wherein the objects belong to the same species,
   wherein the data is unique object identifiers and object features,
   wherein the features are features of at least two types and indices obtained on the basis of the said features;
   a step of generating, based on said preformed set of classifier data associated with the plurality of individual objects based on the random forest method, wherein the number of decision trees is provided by at least 50;
   a step of obtaining a set of features and/or combinations of features from said features, comprising only such features and/or combinations of features that statistically provide prediction accuracy no less than prediction accuracy of said generated classifier based on the random forest method;
   wherein the generated object state classifier is configured to:
      when collecting a set of data associated with an object which state is to be classified, having the same structure, determine the presence of a feature and/or a combination of features in said set of features and/or combinations of features, wherein such feature and/or combination of features are suitable for assigning the object which state is to be classified to any said group of objects from a plurality of groups of objects,
      and when said suitable feature and/or combination of features are not found, assign said new object to any said group of objects based on the prediction result obtained using said classifier based on the random forest method.
2. Method according to embodiment 1, characterized in that the preformed set of data associated with the plurality of objects is obtained by executing, using a processor of the computer device, a method of generating a set of data associated with the plurality of objects, consisting of completing the steps:
   a step of obtaining a plurality of sets of data associated with individual objects,
   wherein each entity is preliminarily assigned to a first group, or to a second group, or to a third group,
   wherein the objects are of the same species,
   wherein the data are object identifiers and object features,
   wherein a single unique identifier is associated with each object,
   wherein each object is associated with a plurality of features,
   wherein the features are of a first type, of a second type, a first index, a second index,
   wherein each said set of object-associated data is a combination of an identifier of that object and features of that object,
   wherein the features of the first type are current diagnostics of the state of the object,
   wherein each set of object-associated data comprises the same kinds of features of the first type,
   wherein the features of the second type are retrospective diagnostics data of the state of the object,
   wherein each set of object-associated data comprises the same kinds of features of the second type,
   wherein at least a portion of the features of the second type corresponds to a first contribution value and a second contribution value,
   wherein the first contribution value is the ratio of the proportion of objects included in the first group with which the second type attribute is associated to the proportion of objects included in the third group with which the feature of the second type is associated,
   wherein the second contribution value is the ratio of the proportion of objects in the second group with which the feature of the second type is associated to the proportion of objects in the third group, with which the same feature of the second type is associated,
   the first index for each object is the sum of the first contribution values associated with that object,
   wherein the second index for each object is the sum of the second contribution values associated with that object;
   and the step of generating a preformed set of data associated with the plurality of objects by combining said obtained sets of data associated with individual objects.
3. Method according to embodiment 2, characterized in that additionally by means of the processor of the computer device the following steps are performed:
   a step of selecting a portion of said features of the second type to collect a sample of said features of the second type,
   wherein said sample consists of said features of the second type, which can be grouped according to a common feature;
   obtaining a third index by the processor of the computer learning device performing a classification model or a clustering model on said sample.
4. Method according to embodiment 3, characterized in that the classification model is based on one of:
   logistic regression, wherein, when the classification model is a logistic regression, for each of the mentioned features of the second type from the said sample, weights are obtained, on the basis of which the third index is formed,
   the support vector method,
   the decision tree method,
   the random forest method,
   the naive Bayes classifier,
   the k-nearest neighbor method,
   the neural network,
   the gradient boosting,
   the clustering model is based on one of:
      the k-means method,
      the method of density-based spatial clustering of applications with noise,
      the hierarchical clustering method,
      the spectral clustering method.
5. Method according to embodiment 4, characterized in that when the classification model is a logistic regression, regularization is applied.
6. Method according to any one of embodiments 3 to 5, characterized in that further, by means of the processor of the computer device, a step of excluding from said plurality of sets of associated with individual data objects said features of the second type that have fallen into said selection of features of the second type is performed.
7. Method according to any one of embodiments 1 to 5, characterized in that characterized in that, when constructing said classifier based on the random forest method using a processor of a computer device, the following steps are performed:
   a step, at which bootstrap is performed for said preformed set of data associated with a plurality of objects, wherein the first random sample of data is formed from said unique identifiers, said first type features, said second type features and said indices,
   wherein said features and said indices are associated with said objects by corresponding unique identifiers,
   wherein repetition is allowed;
   a step, at which a decision tree is trained on said formed first random sample of data,
   wherein during said training, when a node of the decision tree is partitioned, a subsequent random sample of data is formed from said features of the first type, said features of the second type, said indices,
   wherein the partitioning is carried out until no more than 15% of the total number of parameters that fall into the first formed subsequent sample is left in each node of the tree,
   wherein when constructing the decision tree, parameters are first determined from said features of the first type, the mentioned features of the second type, the mentioned indices that provide the least entropy at the first partition,
   wherein the mentioned determination of the parameters providing the least entropy at partition is carried out recursively until the partition is completed;
   a step, which repeatedly provides training of the decision tree until the number of trained decision trees is at least 50;
   wherein the formed classifier based on the random forest method is configured to:
      when collecting a new set of data associated with a new object that is not included in the mentioned pre-formed set of data associated with a plurality of individual objects, but having the same structure;
      assigning the mentioned new object to any mentioned group based on the prediction result,
      wherein the prediction result is the result of voting of all mentioned decision trees on the assignment of the object to any group.
8. Method according to embodiment 7, characterized in that the number of trained decisive trees is provided from 400 to 600.
9. Method according to any one of embodiments 7 or 8, characterized in that said set of features and/or combinations of features comprising only those features and/or such combinations of features that statistically provide prediction accuracy no less than prediction accuracy of said formed classifier based on the random forest method, when it includes any combination of features suitable for assigning an object which state is to be classified to any said group of objects from a plurality of groups of objects, then such a combination of features includes only features of the first type, only features of the second type, or features of the first type and features of the second type.
10. Method according to embodiment 6, characterized in that when constructing said classifier based on the random forest method using a processor of a computer device, the following steps are performed:
   a step, at which bootstrap is performed for said preformed set of data associated with a plurality of objects, wherein the first random sample of data is formed from said unique identifiers, said first type features, said second type features and said indices,
   wherein said features and said indices are associated with said objects by corresponding unique identifiers,
   wherein repetition is allowed;
   a step, at which a decision tree is trained on said formed first random sample of data,
   wherein during said training, when a node of the decision tree is partitioned, a subsequent random sample of data is formed from said features of the first type, said features of the second type, said indices,
   wherein the partitioning is carried out until no more than 15% of the total number of parameters that fall into the first formed subsequent sample is left in each node of the tree,
   wherein when constructing the decision tree, parameters are first determined from said features of the first type, the mentioned features of the second type, the mentioned indices that provide the least entropy at the first partition,
   wherein the mentioned determination of the parameters providing the least entropy at partition is carried out recursively until the partition is completed;
   a step, which repeatedly provides training of the decision tree until the number of trained decision trees is at least 50;
   wherein the formed classifier based on the random forest method is configured to:
      when collecting a new set of data associated with a new object that is not included in the mentioned pre-formed set of data associated with a plurality of individual objects, but having the same structure;
      assigning the mentioned new object to any mentioned group based on the prediction result,
      wherein the prediction result is the result of voting of all mentioned decision trees on the assignment of the object to any group.
11. Method according to embodiment 9, characterized in that the number of trained decisive trees is provided from 400 to 600.
12. Method according to any one of embodiments 10 or 11, characterized in that said set of features and/or combinations of features comprising only those features and/or such combinations of features that statistically provide prediction accuracy no less than prediction accuracy of said formed classifier based on the random forest method, when it includes any combination of features suitable for assigning an object which state is to be classified to any said group of objects from a plurality of groups of objects, then such a combination of features includes only features of the first type, only features of the second type, or features of the first type and features of the second type.
13. Method according to any one of embodiments 1 to 5, characterized in that the number of trained decisive trees is provided from 400 to 600.
14. Method according to embodiment 6, characterized in that the number of trained decisive trees is provided from 400 to 600.
15. Method according to any one of embodiments 1 to 5, characterized in that said set of features and/or combinations of features comprising only those features and/or such combinations of features that statistically provide prediction accuracy no less than prediction accuracy of said formed classifier based on the random forest method, when it includes any combination of features suitable for assigning an object which state is to be classified to any said group of objects from a plurality of groups of objects, then such a combination of features includes only features of the first type or features of the first type and features of the second type.
16. Method according to embodiment 14, characterized in that said set of features and/or combinations of features comprising only those features and/or such combinations of features that statistically provide prediction accuracy no less than prediction accuracy of said formed classifier based on the random forest method, when it includes any combination of features suitable for assigning an object which state is to be classified to any said group of objects from a plurality of groups of objects, then such a combination of features includes only features of the first type, only features of the second type, or features of the first type and features of the second type.
17. Method according to embodiment 6, characterized in that said set of features and/or combinations of features comprising only those features and/or such combinations of features that statistically provide prediction accuracy no less than prediction accuracy of said formed classifier based on the random forest method, when it includes any combination of features suitable for assigning an object which state is to be classified to any said group of objects from a plurality of groups of objects, then such a combination of features includes only features of the first type, only features of the second type, or features of the first type and features of the second type.
18. Method according to any one of embodiments 1 to 5, 7, 8, 10, 11, 14, 16, 17, characterized in that characterized in that said set of data associated with the object which state is to be classified is obtained using a mobile client device.
19. Method according to embodiment 6, characterized in that said set of data associated with the object which state is to be classified is obtained using a mobile client device.
20. Method according to embodiment 9, characterized in that said set of data associated with the object which state is to be classified is obtained using a mobile client device.
21. Method according to embodiment 12, characterized in that said set of data associated with the object which state is to be classified is obtained using a mobile client device.
22. Method according to embodiment 13, characterized in that said set of data associated with the object which state is to be classified is obtained using a mobile client device.
23. Method according to embodiment 15, characterized in that said set of data associated with the object which state is to be classified is obtained using a mobile client device.
24. Method according to embodiment 18, characterized in that upon receiving said set of data associated with the object which state is to be classified, using a processor of a mobile client device, a method is performed to collect a set of data associated with the object for classifying the state of this object using the object state classifier generated by the method according to any one of embodiments 1 to 18, the method comprises the following steps performed in any sequence:
   a step of obtaining a unique identifier of the object which state is to be classified,
   wherein the object which state is to be classified belongs to the same type as the said objects from a preformed set of data associated with the plurality of individual objects;
   a step of collecting features of an object which state is to be classified,
   wherein said features including features of at least two types,
   wherein said features being of the same types as the corresponding features from the preformed set of data associated with the plurality of individual objects;
   and method comprises the following steps:
      a step performed after the implementation of the previous steps, wherein the collected set of data associated with the object which state is to be classified includes said unique identifier of the object which state is to be classified and features of this object is recorded in the memory of the mobile client device;
      and, either a step at which the received set of data associated with the object which state is to be classified is transmitted using the communication link to the memory of the server of the object state classification system and using the processor of the system server to obtain indices based on the features from said new set;
      or a step, at which the indices are obtained based on the features from said new set using the processor of the mobile client device.
25. Method according to embodiment 24, characterized in that when obtaining said indices using said server processor or said processor of the mobile client device, the method for obtaining indices is performed, the method comprises the following steps:
   a step of selecting at least the first type features and the second type features from said data set associated with the object which state is to be classified;
   a step of receiving for at least a portion of the collected features from the contribution storage unit the values corresponding to them of the first contribution value and the second contribution value;
   a step of summing up all the obtained first contribution values to obtain the first index of the object which state is to be classified;
   a step of summing up all the obtained second contribution values to obtain the second index of the object which state is to be classified;
   a step of adding the obtained indices to said data set associated with the object which state is to be classified.
26. Method according to embodiment 25, characterized in that, in addition, using said server processor or said processor of the mobile client device, the following steps are performed:
   a step of selecting a portion of said features of the second type to collect a sample of said features of the second type,
   wherein said sample consists of said features of the second type, which can be grouped according to a common feature;
   a step of obtaining a third index by performing by said server processor or said processor of the mobile client device a training model of classification or clustering model on said sample;
   a step of assigning the obtained third index to an object which state is to be classified, and adding the obtained third index to said set of data associated with the object which state is to be classified.
27. Method according to embodiment 26, characterized in that the classification model is based on one of:
   logistic regression, wherein, when the classification model is a logistic regression, for each of the mentioned features of the second type from the said sample, weights are obtained, on the basis of which the third index is formed,
   the support vector method,
   the decision tree method,
   the random forest method,
   the naive Bayes classifier,
   the k-nearest neighbor method,
   the neural network,
   the gradient boosting,
   the clustering model is based on one of:
      the k-means method,
      the method of density-based spatial clustering of applications with noise,
      the hierarchical clustering method,
      the spectral clustering method.
28. Method according to embodiment 27, characterized in that when the classification model is a logistic regression, regularization is applied.
29. Method according to embodiment 25, characterized in that, in addition, using said processor of the mobile client device, the following steps are performed:
   a step of selecting a portion of said features of the second type to collect a sample of said features of the second type,
   wherein said sample consists of said features of the second type, which can be grouped according to a common feature;
   a step of obtaining for each said features of the second type from said sample of the logistic regression weights from the logistic regression weight storage unit and forming a third index based on the obtained weights;
   a step of assigning the obtained third index to an object which state is to be classified, and adding the obtained third index to said set of data associated with the object which state is to be classified.
30. Method according to any one of embodiments 26 to 29, characterized in that further, by means of the processor of the computer device, a step of excluding from said set of data associated with the object which state is to be classified, said features of the second type that have fallen into said selection of features of the second type, is performed.
31. Method according to any one of embodiments 24 to 29, characterized in that, using a processor of a mobile client device, a graphical user interface is generated for obtaining a unique identifier of an object which state is to be classified and features associated with an object which state is to be classified, providing at least:
   a first means for obtaining at least said unique identifier of an object which state is to be classified using an input device of a mobile client device;
   a second means for obtaining at least said features of a first type using a photo-video camera of a mobile client device;
   a third means for obtaining at least said features of a second type using an input device of a mobile client device.
32. Method according to embodiment 31, characterized in that the first means comprises:
   a user data receiving module provided by said graphical user interface, configured to provide at least a graphical region for inputting user data in response to signals generated by said input device and recording the received user data in the memory of the mobile client device;
   and a module for generating a unique identifier configured to, in response to recording said user data in said memory:
      either using a processor of the mobile client device for generating a unique identifier of the object which state is to be classified, based on said recorded user data and recording said generated unique identifier in the memory of the mobile client device;
      or using a processor and a communication means of the mobile client device to transmit said user data to a server of the object state classification system to generate, using a processor of this server based on said user data, a unique identifier of the object which state to be classified, and receive from said server said generated unique identifier and record said generated unique identifier in the memory of the mobile client device.
33. Method according to embodiment 31, characterized in that the first means comprises:
   an authentication module provided by said graphical user interface, providing at least a graphical region configured to generate, in response to an interaction signal therewith received from said input device, an authentication signal and using a processor and a communication means of the mobile client device transmitting the generated authentication signal to the authentication server, receiving from said authentication server user data and recording the received user data in the memory of the mobile client device;
   and a module for generating a unique identifier configured to, in response to recording said user data in said memory:
      either using a processor of the mobile client device to generate a unique identifier of the object which state is to be classified based on said recorded user data and writing said generated unique identifier to the memory of the mobile client device,
      or using a processor and a communication means of the mobile client device to transmit said user data to a server of the object state classification system to generate, using a processor of this server based on said user data, a unique identifier of the object which state to be classified, and receive from said server said generated unique identifier and record said generated unique identifier in the memory of the mobile client device.
34. Method according to embodiment 31, characterized in that the second means comprises:
   a first type feature acquisition module provided by said graphical user interface, configured to provide at least a graphical region for generating a signal activating a photo-video camera of the mobile client device,
   wherein the first type feature acquisition module is configured to, via said photo-video camera, perform a photo capture of the diagnostic tool and/or perform a video capture of the diagnostic tool to obtain a photo file comprising a photo image of the diagnostic tool and/or a video file comprising a video image of the diagnostic tool and recording said photo file and/or video file in the memory of the mobile client device;
   and a first type feature extraction module configured to, in response to the recording of said photo file and/or said video file in said memory:
      either using a processor of the mobile client recognition device in said photo image and/or in said video image, of at least one marker associated with at least one feature of the first type, and in response to the recognition of said marker, recording said first type feature associated with said marker in said memory,
      either using the processor and the communication means of the mobile client device for transmitting said photo image and/or said video image to the server of the object state classification system for recognizing, using the processor of said server, at least one token associated with at least one feature of the first type, and receiving, from said server, at least one said feature of the first type associated with said token, and recording this received feature of the first type in said memory.
35. Method according to embodiment 34, characterized in that the diagnostic tool is a medium comprising at least one indicator region that houses an indicator comprising a reagent that, when reacted with a fluid, forms said marker by changing the state of the reagent.
36. Method according to embodiment 35, characterized in that the liquid medium is a biomaterial, including saliva, and wherein the change in the state of the reagent is one or a combination of: a change in the color of the reagent, a change in the color intensity of the reagent.
37. Method according to embodiment 31, characterized in that the third means comprises:
   a second type feature obtaining module provided by said graphical user interface, configured to:
   provide a plurality of first graphical regions for generating a second type feature, each of which, in response to an interaction signal received from said input device, generates a second type feature forming signal,
   providing at least one second graphical region for generating a second type feature, configured to input user data in response to signals generated by said input device and configured to, in response to input of user data, generate a second type feature generation signal,
   wherein each said first graphic region being associated with one second type feature;
   wherein the second type feature acquisition module is configured to, in response to said second type feature generation signal obtained using any of said first graphic regions:
      either using a processor of a mobile client identification device in a second type feature database associated with a corresponding graphic region, and recording an identified feature of the second type in the memory of the mobile client device,
      or using a processor and a communication means of the mobile client device for generating a feature identification signal of the second type and transmitting this identification signal to a server of the object state classification system for identification using a processor of this server in a database of features of the second type of the feature of the second type associated with the corresponding graphic region, and receiving from said server said identified feature of the second type and recording this received identified feature of the second type in the memory of the mobile client device;
      the second type feature acquisition module is configured, in response to said second type feature generation signal obtained using any of said second graphic regions:
         either using the processor of the mobile client device to calculate the second type feature and write the calculated second type feature to the memory of the mobile client device,
         or using the processor and the communication means of the mobile client device to generate the second type feature calculation signal and transmit this calculation signal to the server of the object state classification system for calculating the second type feature using the processor of this server, and receiving from said server of said calculated feature of the second type and recording this obtained calculated feature of the second type in the memory of the mobile client device.
38. Method according to any one of embodiments 31 to 37, characterized in that, after obtaining a unique identifier of the object which state is to be classified, and said features of the first type and features of the second type:
   either, using the processor of the mobile client device,
   the said set of data associated with the object which state is to be classified is formed,
   and the said generated set of data associated with the object which state is to be classified is recorded in the memory of the object's state classification device;
   or, using the processor and the communication means of the mobile client device, the said identifier and features are transmitted to the server of the object's state classification system and, using the processor of this server, the said set of data associated with the object which state is to be classified is formed,
   and the said generated set of data associated with the object which state is to be classified is recorded in the memory of the server of the object's state classification system.
39. Method according to embodiment 38, characterized in that the device for classifying the state of an object is a mobile client device or a server of the system for classifying the state of an object.
40. Method according to embodiment 30, characterized in that, using a processor of a mobile client device, a graphical user interface is generated for obtaining a unique identifier of an object which state is to be classified and features associated with an object which state is to be classified, providing at least:
   a first means for obtaining at least said unique identifier of an object which state is to be classified using an input device of a mobile client device;
   a second means for obtaining at least said features of a first type using a photo-video camera of a mobile client device;
   a third means for obtaining at least said features of a second type using an input device of a mobile client device.
41. Method according to embodiment 40, characterized in that the first means comprises:
   a user data receiving module provided by said graphical user interface, configured to provide at least a graphical region for inputting user data in response to signals generated by said input device and recording the received user data in the memory of the mobile client device;
   and a module for generating a unique identifier configured to, in response to recording said user data in said memory:
      either using a processor of the mobile client device for generating a unique identifier of the object which state is to be classified, based on said recorded user data and recording said generated unique identifier in the memory of the mobile client device;
      or using a processor and a communication means of the mobile client device to transmit said user data to a server of the object state classification system to generate, using a processor of this server based on said user data, a unique identifier of the object which state to be classified, and receive from said server said generated unique identifier and record said generated unique identifier in the memory of the mobile client device.
42. Method according to embodiment 40, characterized in that the first means comprises:
   an authentication module provided by said graphical user interface, providing at least a graphical region configured to generate, in response to an interaction signal therewith received from said input device, an authentication signal and using a processor and a communication means of the mobile client device transmitting the generated authentication signal to the authentication server, receiving from said authentication server user data and recording the received user data in the memory of the mobile client device;
   and a module for generating a unique identifier configured to, in response to recording said user data in said memory:
      either using a processor of the mobile client device to generate a unique identifier of the object which state is to be classified based on said recorded user data and writing said generated unique identifier to the memory of the mobile client device,
      or using a processor and a communication means of the mobile client device to transmit said user data to a server of the object state classification system to generate, using a processor of this server based on said user data, a unique identifier of the object which state to be classified, and receive from said server said generated unique identifier and record said generated unique identifier in the memory of the mobile client device.
43. Method according to embodiment 40, characterized in that the second means comprises:
   a first type feature acquisition module provided by said graphical user interface, configured to provide at least a graphical region for generating a signal activating a photo-video camera of the mobile client device,
   wherein the first type feature acquisition module is configured to, via said photo-video camera, perform a photo capture of the diagnostic tool and/or perform a video capture of the diagnostic tool to obtain a photo file comprising a photo image of the diagnostic tool and/or a video file comprising a video image of the diagnostic tool and recording said photo file and/or video file in the memory of the mobile client device;
   and a first type feature extraction module configured to, in response to the recording of said photo file and/or said video file in said memory:
      either using a processor of the mobile client recognition device in said photo image and/or in said video image, of at least one marker associated with at least one feature of the first type, and in response to the recognition of said marker, recording said first type feature associated with said marker in said memory,
      either using the processor and the communication means of the mobile client device for transmitting said photo image and/or said video image to the server of the object state classification system for recognizing, using the processor of said server, at least one token associated with at least one feature of the first type, and receiving, from said server, at least one said feature of the first type associated with said token, and recording this received feature of the first type in said memory.
44. Method according to embodiment 43, characterized in that the diagnostic tool is a medium comprising at least one indicator region that houses an indicator comprising a reagent that, when reacted with a fluid, forms said marker by changing the state of the reagent.
45. Method according to embodiment 44, characterized in that the liquid medium is a biomaterial, including saliva, and wherein the change in the state of the reagent is one or a combination of: a change in the color of the reagent, a change in the color intensity of the reagent.
46. Method according to embodiment 40, characterized in that the third means comprises:
   a second type feature obtaining module provided by said graphical user interface, configured to:
   provide a plurality of first graphical regions for generating a second type feature, each of which, in response to an interaction signal received from said input device, generates a second type feature forming signal,
   providing at least one second graphical region for generating a second type feature, configured to input user data in response to signals generated by said input device and configured to, in response to input of user data, generate a second type feature generation signal,
   wherein each said first graphic region being associated with one second type feature;
   wherein the second type feature acquisition module is configured to, in response to said second type feature generation signal obtained using any of said first graphic regions:
      either using a processor of a mobile client identification device in a second type feature database associated with a corresponding graphic region, and recording an identified feature of the second type in the memory of the mobile client device,
      or using a processor and a communication means of the mobile client device for generating a feature identification signal of the second type and transmitting this identification signal to a server of the object state classification system for identification using a processor of this server in a database of features of the second type of the feature of the second type associated with the corresponding graphic region, and receiving from said server said identified feature of the second type and recording this received identified feature of the second type in the memory of the mobile client device;
      the second type feature acquisition module is configured, in response to said second type feature generation signal obtained using any of said second graphic regions:
         either using the processor of the mobile client device to calculate the second type feature and write the calculated second type feature to the memory of the mobile client device,
         or using the processor and the communication means of the mobile client device to generate the second type feature calculation signal and transmit this calculation signal to the server of the object state classification system for calculating the second type feature using the processor of this server, and receiving from said server of said calculated feature of the second type and recording this obtained calculated feature of the second type in the memory of the mobile client device.
47. Method according to any one of embodiments 40 to 46, characterized in that, after obtaining a unique identifier of the object which state is to be classified, and said features of the first type and features of the second type:
   either, using the processor of the mobile client device,
   the said set of data associated with the object which state is to be classified is formed,
   and the said generated set of data associated with the object which state is to be classified is recorded in the memory of the object's state classification device;
   or, using the processor and the communication means of the mobile client device, the said identifier and features are transmitted to the server of the object's state classification system and, using the processor of this server, the said set of data associated with the object which state is to be classified is formed,
   and the said generated set of data associated with the object which state is to be classified is recorded in the memory of the server of the object's state classification system.
48. Method according to embodiment 47, characterized in that the device for classifying the state of an object is a mobile client device or a server of the system for classifying the state of an object.
49. Method according to any one of embodiments 19 to 23, characterized in that upon receiving said set of data associated with the object which state is to be classified, using a processor of a mobile client device, a method is performed to collect a set of data associated with the object for classifying the state of this object using the object state classifier generated by the method according to any one of embodiments 1 to 18, the method comprises the following steps performed in any sequence:
   a step of obtaining a unique identifier of the object which state is to be classified,
   wherein the object which state is to be classified belongs to the same type as the said objects from a preformed set of data associated with the plurality of individual objects;
   a step of collecting features of an object which state is to be classified,
   wherein said features including features of at least two types,
   wherein said features being of the same types as the corresponding features from the preformed set of data associated with the plurality of individual objects;
   and method comprises the following steps:
      a step performed after the implementation of the previous steps, wherein the collected set of data associated with the object which state is to be classified includes said unique identifier of the object which state is to be classified and features of this object is recorded in the memory of the mobile client device;
      and, either a step at which the received set of data associated with the object which state is to be classified is transmitted using the communication link to the memory of the server of the object state classification system and using the processor of the system server to obtain indices based on the features from said new set;
      or a step, at which the indices are obtained based on the features from said new set using the processor of the mobile client device.
50. Method according to embodiment 49, characterized in that when obtaining said indices using said server processor or said processor of the mobile client device, the method for obtaining indices is performed, the method comprises the following steps:
   a step of selecting at least the first type features and the second type features from said data set associated with the object which state is to be classified;
   a step of receiving for at least a portion of the collected features from the contribution storage unit the values corresponding to them of the first contribution value and the second contribution value;
   a step of summing up all the obtained first contribution values to obtain the first index of the object which state is to be classified;
   a step of summing up all the obtained second contribution values to obtain the second index of the object which state is to be classified;
   a step of adding the obtained indices to said data set associated with the object which state is to be classified.
51. Method according to embodiment 50, characterized in that, in addition, using said server processor or said processor of the mobile client device, the following steps are performed:
   a step of selecting a portion of said features of the second type to collect a sample of said features of the second type,
   wherein said sample consists of said features of the second type, which can be grouped according to a common feature;
   a step of obtaining a third index by performing by said server processor or said processor of the mobile client device a training model of classification or clustering model on said sample;
   a step of assigning the obtained third index to an object which state is to be classified, and adding the obtained third index to said set of data associated with the object which state is to be classified.
52. Method according to embodiment 51, characterized in that the classification model is based on one of:
   logistic regression, wherein, when the classification model is a logistic regression, for each of the mentioned features of the second type from the said sample, weights are obtained, on the basis of which the third index is formed,
   the support vector method,
   the decision tree method,
   the random forest method,
   the naive Bayes classifier,
   the k-nearest neighbor method,
   the neural network,
   the gradient boosting,
   the clustering model is based on one of:
      the k-means method,
      the method of density-based spatial clustering of applications with noise,
      the hierarchical clustering method,
      the spectral clustering method.
53. Method according to embodiment 52, characterized in that when the classification model is a logistic regression, regularization is applied.
54. Method according to embodiment 50, characterized in that, in addition, using said processor of the mobile client device, the following steps are performed:
   a step of selecting a portion of said features of the second type to collect a sample of said features of the second type,
   wherein said sample consists of said features of the second type, which can be grouped according to a common feature;
   a step of obtaining for each said features of the second type from said sample of the logistic regression weights from the logistic regression weight storage unit and forming a third index based on the obtained weights;
   a step of assigning the obtained third index to an object which state is to be classified, and adding the obtained third index to said set of data associated with the object which state is to be classified.
55. Method according to any one of embodiments 50 to 54, characterized in that further, by means of the processor of the computer device, a step of excluding from said set of data associated with the object which state is to be classified, said features of the second type that have fallen into said selection of features of the second type, is performed.
56. Method according to any one of embodiments 50 to 54, characterized in that, using a processor of a mobile client device, a graphical user interface is generated for obtaining a unique identifier of an object which state is to be classified and features associated with an object which state is to be classified, providing at least:
   a first means for obtaining at least said unique identifier of an object which state is to be classified using an input device of a mobile client device;
   a second means for obtaining at least said features of a first type using a photo-video camera of a mobile client device;
   a third means for obtaining at least said features of a second type using an input device of a mobile client device.
57. Method according to embodiment 56, characterized in that the first means comprises:
   a user data receiving module provided by said graphical user interface, configured to provide at least a graphical region for inputting user data in response to signals generated by said input device and recording the received user data in the memory of the mobile client device;
   and a module for generating a unique identifier configured to, in response to recording said user data in said memory:
      either using a processor of the mobile client device for generating a unique identifier of the object which state is to be classified, based on said recorded user data and recording said generated unique identifier in the memory of the mobile client device;
      or using a processor and a communication means of the mobile client device to transmit said user data to a server of the object state classification system to generate, using a processor of this server based on said user data, a unique identifier of the object which state to be classified, and receive from said server said generated unique identifier and record said generated unique identifier in the memory of the mobile client device.
58. Method according to embodiment 56, characterized in that the first means comprises:
   an authentication module provided by said graphical user interface, providing at least a graphical region configured to generate, in response to an interaction signal therewith received from said input device, an authentication signal and using a processor and a communication means of the mobile client device transmitting the generated authentication signal to the authentication server, receiving from said authentication server user data and recording the received user data in the memory of the mobile client device;
   and a module for generating a unique identifier configured to, in response to recording said user data in said memory:
      either using a processor of the mobile client device to generate a unique identifier of the object which state is to be classified based on said recorded user data and writing said generated unique identifier to the memory of the mobile client device,
      or using a processor and a communication means of the mobile client device to transmit said user data to a server of the object state classification system to generate, using a processor of this server based on said user data, a unique identifier of the object which state to be classified, and receive from said server said generated unique identifier and record said generated unique identifier in the memory of the mobile client device.
59. Method according to embodiment 56, characterized in that the second means comprises:
   a first type feature acquisition module provided by said graphical user interface, configured to provide at least a graphical region for generating a signal activating a photo-video camera of the mobile client device,
   wherein the first type feature acquisition module is configured to, via said photo-video camera, perform a photo capture of the diagnostic tool and/or perform a video capture of the diagnostic tool to obtain a photo file comprising a photo image of the diagnostic tool and/or a video file comprising a video image of the diagnostic tool and recording said photo file and/or video file in the memory of the mobile client device;
   and a first type feature extraction module configured to, in response to the recording of said photo file and/or said video file in said memory:
      either using a processor of the mobile client recognition device in said photo image and/or in said video image, of at least one marker associated with at least one feature of the first type, and in response to the recognition of said marker, recording said first type feature associated with said marker in said memory,
      either using the processor and the communication means of the mobile client device for transmitting said photo image and/or said video image to the server of the object state classification system for recognizing, using the processor of said server, at least one token associated with at least one feature of the first type, and receiving, from said server, at least one said feature of the first type associated with said token, and recording this received feature of the first type in said memory.
60. Method according to embodiment 59, characterized in that the diagnostic tool is a medium comprising at least one indicator region that houses an indicator comprising a reagent that, when reacted with a fluid, forms said marker by changing the state of the reagent.
61. Method according to embodiment 61, characterized in that the liquid medium is a biomaterial, including saliva, and wherein the change in the state of the reagent is one or a combination of: a change in the color of the reagent, a change in the color intensity of the reagent.
62. Method according to embodiment 56, characterized in that the third means comprises:
   a second type feature obtaining module provided by said graphical user interface, configured to:
      provide a plurality of first graphical regions for generating a second type feature, each of which, in response to an interaction signal received from said input device, generates a second type feature forming signal,
      providing at least one second graphical region for generating a second type feature, configured to input user data in response to signals generated by said input device and configured to, in response to input of user data, generate a second type feature generation signal,
      wherein each said first graphic region being associated with one second type feature;
      wherein the second type feature acquisition module is configured to, in response to said second type feature generation signal obtained using any of said first graphic regions:
         either using a processor of a mobile client identification device in a second type feature database associated with a corresponding graphic region, and recording an identified feature of the second type in the memory of the mobile client device,
         or using a processor and a communication means of the mobile client device for generating a feature identification signal of the second type and transmitting this identification signal to a server of the object state classification system for identification using a processor of this server in a database of features of the second type of the feature of the second type associated with the corresponding graphic region, and receiving from said server said identified feature of the second type and recording this received identified feature of the second type in the memory of the mobile client device;
         the second type feature acquisition module is configured, in response to said second type feature generation signal obtained using any of said second graphic regions:
            either using the processor of the mobile client device to calculate the second type feature and write the calculated second type feature to the memory of the mobile client device,
            or using the processor and the communication means of the mobile client device to generate the second type feature calculation signal and transmit this calculation signal to the server of the object state classification system for calculating the second type feature using the processor of this server, and receiving from said server of said calculated feature of the second type and recording this obtained calculated feature of the second type in the memory of the mobile client device.
63. Method according to any one of embodiments 56 to 62, characterized in that, after obtaining a unique identifier of the object which state is to be classified, and said features of the first type and features of the second type:
   either, using the processor of the mobile client device,
   the said set of data associated with the object which state is to be classified is formed,
   and the said generated set of data associated with the object which state is to be classified is recorded in the memory of the object's state classification device;
   or, using the processor and the communication means of the mobile client device, the said identifier and features are transmitted to the server of the object's state classification system and, using the processor of this server, the said set of data associated with the object which state is to be classified is formed,
   and the said generated set of data associated with the object which state is to be classified is recorded in the memory of the server of the object's state classification system.
64. Method according to embodiment 63, characterized in that the device for classifying the state of an object is a mobile client device or a server of the system for classifying the state of an object.
65. Method according to embodiment 55, characterized in that, using a processor of a mobile client device, a graphical user interface is generated for obtaining a unique identifier of an object which state is to be classified and features associated with an object which state is to be classified, providing at least:
   a first means for obtaining at least said unique identifier of an object which state is to be classified using an input device of a mobile client device;
   a second means for obtaining at least said features of a first type using a photo-video camera of a mobile client device;
   a third means for obtaining at least said features of a second type using an input device of a mobile client device.
66. Method according to embodiment 65, characterized in that the first means comprises:
   a user data receiving module provided by said graphical user interface, configured to provide at least a graphical region for inputting user data in response to signals generated by said input device and recording the received user data in the memory of the mobile client device;
   and a module for generating a unique identifier configured to, in response to recording said user data in said memory:
      either using a processor of the mobile client device for generating a unique identifier of the object which state is to be classified, based on said recorded user data and recording said generated unique identifier in the memory of the mobile client device;
      or using a processor and a communication means of the mobile client device to transmit said user data to a server of the object state classification system to generate, using a processor of this server based on said user data, a unique identifier of the object which state to be classified, and receive from said server said generated unique identifier and record said generated unique identifier in the memory of the mobile client device.
67. Method according to embodiment 65, characterized in that the first means comprises:
   an authentication module provided by said graphical user interface, providing at least a graphical region configured to generate, in response to an interaction signal therewith received from said input device, an authentication signal and using a processor and a communication means of the mobile client device transmitting the generated authentication signal to the authentication server, receiving from said authentication server user data and recording the received user data in the memory of the mobile client device;
   and a module for generating a unique identifier configured to, in response to recording said user data in said memory:
      either using a processor of the mobile client device to generate a unique identifier of the object which state is to be classified based on said recorded user data and writing said generated unique identifier to the memory of the mobile client device,
      or using a processor and a communication means of the mobile client device to transmit said user data to a server of the object state classification system to generate, using a processor of this server based on said user data, a unique identifier of the object which state to be classified, and receive from said server said generated unique identifier and record said generated unique identifier in the memory of the mobile client device.
68. Method according to embodiment 65, characterized in that the second means comprises:
   a first type feature acquisition module provided by said graphical user interface, configured to provide at least a graphical region for generating a signal activating a photo-video camera of the mobile client device,
   wherein the first type feature acquisition module is configured to, via said photo-video camera, perform a photo capture of the diagnostic tool and/or perform a video capture of the diagnostic tool to obtain a photo file comprising a photo image of the diagnostic tool and/or a video file comprising a video image of the diagnostic tool and recording said photo file and/or video file in the memory of the mobile client device;
   and a first type feature extraction module configured to, in response to the recording of said photo file and/or said video file in said memory:
      either using a processor of the mobile client recognition device in said photo image and/or in said video image, of at least one marker associated with at least one feature of the first type, and in response to the recognition of said marker, recording said first type feature associated with said marker in said memory,
      either using the processor and the communication means of the mobile client device for transmitting said photo image and/or said video image to the server of the object state classification system for recognizing, using the processor of said server, at least one token associated with at least one feature of the first type, and receiving, from said server, at least one said feature of the first type associated with said token, and recording this received feature of the first type in said memory.
69. Method according to embodiment 68, characterized in that the diagnostic tool is a medium comprising at least one indicator region that houses an indicator comprising a reagent that, when reacted with a fluid, forms said marker by changing the state of the reagent.
70. Method according to embodiment 69, characterized in that the liquid medium is a biomaterial, including saliva, and wherein the change in the state of the reagent is one or a combination of: a change in the color of the reagent, a change in the color intensity of the reagent.
71. Method according to embodiment 65, characterized in that the third means comprises:
   a second type feature obtaining module provided by said graphical user interface, configured to:
   provide a plurality of first graphical regions for generating a second type feature, each of which, in response to an interaction signal received from said input device, generates a second type feature forming signal,
   providing at least one second graphical region for generating a second type feature, configured to input user data in response to signals generated by said input device and configured to, in response to input of user data, generate a second type feature generation signal,
   wherein each said first graphic region being associated with one second type feature;
   wherein the second type feature acquisition module is configured to, in response to said second type feature generation signal obtained using any of said first graphic regions:
      either using a processor of a mobile client identification device in a second type feature database associated with a corresponding graphic region, and recording an identified feature of the second type in the memory of the mobile client device,
      or using a processor and a communication means of the mobile client device for generating a feature identification signal of the second type and transmitting this identification signal to a server of the object state classification system for identification using a processor of this server in a database of features of the second type of the feature of the second type associated with the corresponding graphic region, and receiving from said server said identified feature of the second type and recording this received identified feature of the second type in the memory of the mobile client device;
      the second type feature acquisition module is configured, in response to said second type feature generation signal obtained using any of said second graphic regions:
         either using the processor of the mobile client device to calculate the second type feature and write the calculated second type feature to the memory of the mobile client device,
         or using the processor and the communication means of the mobile client device to generate the second type feature calculation signal and transmit this calculation signal to the server of the object state classification system for calculating the second type feature using the processor of this server, and receiving from said server of said calculated feature of the second type and recording this obtained calculated feature of the second type in the memory of the mobile client device.
72. Method according to any one of embodiments 65 to 71, characterized in that, after obtaining a unique identifier of the object which state is to be classified, and said features of the first type and features of the second type:
   either, using the processor of the mobile client device,
   the said set of data associated with the object which state is to be classified is formed,
   and the said generated set of data associated with the object which state is to be classified is recorded in the memory of the object's state classification device;
   or, using the processor and the communication means of the mobile client device, the said identifier and features are transmitted to the server of the object's state classification system and, using the processor of this server, the said set of data associated with the object which state is to be classified is formed,
   and the said generated set of data associated with the object which state is to be classified is recorded in the memory of the server of the object's state classification system.
73. Method according to embodiment 72, characterized in that the device for classifying the state of an object is a mobile client device or a server of the system for classifying the state of an object.
74. A method for classifying the state of an object performed using a processor of a computer device, the method comprising performing the steps of:
   a step of collecting a set of data associated with an object which state is to be classified by means of the method according to any one of embodiments 18 to 73;
   a step of classifying an object which state is to be classified to one of a plurality of groups by means of a classifier of the state of the object obtained by the method according to any one of embodiments 1 to 17,
   wherein each of the plurality of mentioned groups corresponding to one state of the object.
75. A device for generating an object state classifier is provided, comprising at least:
   a processor;
   a memory comprising program code that, when executed by the processor, causes the processor to perform the actions of the method according to any one of embodiments 1 to 73,
76. A mobile client device for collecting a set of data associated with an object which state is to be classified by a classifier obtained by the method according to any one of embodiments 1 to 73, comprising at least:
   a processor;
   an input device;
   a photo-video camera;
   a communication means;
   a memory comprising program code which, when executed by the processor, causes the processor to perform actions of a method for obtaining a set of data associated with an object which state is to be classified, the method being method according to any one of embodiments 18 to 73;
   an output device.
77. A device for classifying the state of an object, comprising at least:
   a processor;
   a communication means;
   a memory comprising program code that, when executed by the processor, causes the processor to perform the actions of the method according to embodiment 74.
78. A system for classifying the state of an object, comprising at least:
   a mobile client device according to embodiment 76;
   a server being a device according to embodiment 77;
   wherein said mobile client device and said server being connected via a communication link.
79. A computer-readable storage media are provided comprising program codes that, when executed by a processor of a computer device, cause the processor to perform the actions of the method according to any one of embodiments 1 to 73,
80. A computer-readable storage media are provided comprising program codes that, when executed by a processor of a computer device, cause the processor to perform the actions of the method according to embodiment 74,
81. A diagnostic tool which is a medium comprising at least one indicator region that houses an indicator comprising a reagent that, when reacted with a fluid, forms said marker by changing the state of the reagent, the marker is designed to be recognized thereof by the camera of the device according to embodiment 76.
82. The diagnostic tool according to embodiment 81, characterized in that the liquid medium is a biomaterial, including saliva, and wherein the change in the state of the reagent is one or a combination of: a change in the color of the reagent, a change in the color intensity of the reagent.

## Claims

1. A method for generating an object state classifier performed using a processor of
a computer device, the method comprising performing the steps of:
a step of obtaining a preformed set of data associated with a plurality of individual objects,
wherein each object belongs to a group of objects from a plurality of groups of objects, wherein the objects belong to the same species,
wherein the data is unique object identifiers and object features,
wherein the features are features of at least two types and indices obtained on the basis of the said features;
a step of generating, based on said preformed set of classifier data associated with the plurality of individual objects based on the random forest method, wherein the number of decision trees is provided by at least 50;
a step of obtaining a set of features and/or combinations of features from said features, comprising only such features and/or combinations of features that statistically provide prediction accuracy no less than prediction accuracy of said generated classifier based on the random forest method;
wherein the generated object state classifier is configured to:
when collecting a set of data associated with an object which state is to be classified, having the same structure, determine the presence of a feature and/or a combination of features in said set of features and/or combinations of features, wherein such feature and/or combination of features are suitable for assigning the object which state is to be classified to any said group of objects from a plurality of groups of objects,
and when said suitable feature and/or combination of features are not found, assign said new object to any said group of objects based on the prediction result obtained using said classifier based on the random forest method.

2. Method according to claim 1, **characterized in that** the preformed set of data associated with the plurality of objects is obtained by executing, using a processor of the computer device, a method of generating a set of data associated with the plurality of objects, consisting of completing the steps:
a step of obtaining a plurality of sets of data associated with individual objects,
wherein each entity is preliminarily assigned to a first group, or to a second group, or to a third group,
wherein the objects are of the same species,
wherein the data are object identifiers and object features,
wherein a single unique identifier is associated with each object,
wherein each object is associated with a plurality of features,
wherein the features are of a first type, of a second type, a first index, a second index,
wherein each said set of object-associated data is a combination of an identifier of that object and features of that object,
wherein the features of the first type are current diagnostics of the state of the object,
wherein each set of object-associated data comprises the same kinds of features of the first type,
wherein the features of the second type are retrospective diagnostics data of the state of the object,
wherein each set of object-associated data comprises the same kinds of features of the second type,
wherein at least a portion of the features of the second type corresponds to a first contribution value and a second contribution value,
wherein the first contribution value is the ratio of the proportion of objects included in the first group with which the second type attribute is associated to the proportion of objects included in the third group with which the feature of the second type is associated,
wherein the second contribution value is the ratio of the proportion of objects in the second group with which the feature of the second type is associated to the proportion of objects in the third group, with which the same feature of the second type is associated,
the first index for each object is the sum of the first contribution values associated with that object,
wherein the second index for each object is the sum of the second contribution values associated with that object;
and the step of generating a preformed set of data associated with the plurality of objects by combining said obtained sets of data associated with individual objects;
preferably **characterized in that** additionally by means of the processor of the computer device the following steps are performed:
a step of selecting a portion of said features of the second type to collect a sample of said features of the second type,
wherein said sample consists of said features of the second type, which can be grouped according to a common feature;
obtaining a third index by the processor of the computer learning device performing a classification model or a clustering model on said sample;
further preferably **characterized in that**
the classification model is based on one of:
logistic regression, wherein, when the classification model is a logistic regression, for each of the mentioned features of the second type from the said sample, weights are obtained, on the basis of which the third index is formed,
the support vector method,
the decision tree method,
the random forest method,
the naive Bayes classifier,
the k-nearest neighbor method,
the neural network,
the gradient boosting,
the clustering model is based on one of:
the k-means method,
the method of density-based spatial clustering of applications with noise,
the hierarchical clustering method,
the spectral clustering method;
even further preferably **characterized in that** when the classification model is a logistic regression, regularization is applied.

3. Method according to claim 1 or claim 2, **characterized in that** one of the following options i) to iv) applies:
option i):
when constructing said classifier based on the random forest method using a processor of a computer device, the following steps are performed:
a step, at which bootstrap is performed for said preformed set of data associated with a plurality of objects, wherein the first random sample of data is formed from said unique identifiers, said first type features, said second type features and said indices,
wherein said features and said indices are associated with said objects by corresponding unique identifiers,
wherein repetition is allowed;
a step, at which a decision tree is trained on said formed first random sample of data,
wherein during said training, when a node of the decision tree is partitioned, a subsequent random sample of data is formed from said features of the first type, said features of the second type, said indices,
wherein the partitioning is carried out until no more than 15% of the total number of parameters that fall into the first formed subsequent sample is left in each node of the tree,
wherein when constructing the decision tree, parameters are first determined from said features of the first type, the mentioned features of the second type, the mentioned indices that provide the least entropy at the first partition,
wherein the mentioned determination of the parameters providing the least entropy at partition is carried out recursively until the partition is completed;
a step, which repeatedly provides training of the decision tree until the number of trained decision trees is at least 50;
wherein the formed classifier based on the random forest method is configured to:
when collecting a new set of data associated with a new object that is not included in the mentioned pre-formed set of data associated with a plurality of individual objects, but having the same structure;
assigning the mentioned new object to any mentioned group based on the prediction result,
wherein the prediction result is the result of voting of all mentioned decision trees on the assignment of the object to any group;
preferably **characterized in that** the number of trained decisive trees is provided from 400 to 600 and/or that said set of features and/or combinations of features comprising only those features and/or such combinations of features that statistically provide prediction accuracy no less than prediction accuracy of said formed classifier based on the random forest method, when it includes any combination of features suitable for assigning an object which state is to be classified to any said group of objects from a plurality of groups of objects, then such a combination of features includes only features of the first type, only features of the second type, or features of the first type and features of the second type, preferably further **characterized in that** said set of data associated with the object which state is to be classified is obtained using a mobile client device;
option ii):
the number of trained decisive trees is provided from 400 to 600, preferably **characterized in that** said set of data associated with the object which state is to be classified is obtained using a mobile client device;
option iii):
said set of features and/or combinations of features comprising only those features and/or such combinations of features that statistically provide prediction accuracy no less than prediction accuracy of said formed classifier based on the random forest method, when it includes any combination of features suitable for assigning an object which state is to be classified to any said group of objects from a plurality of groups of objects, then such a combination of features includes only features of the first type or features of the first type and features of the second type,
preferably **characterized in that** said set of data associated with the object which state is to be classified is obtained using a mobile client device;
option iv):
said set of data associated with the object which state is to be classified is obtained using a mobile client device.

4. Method according to option iv) of claim 3, **characterized in that** upon receiving said set of data associated with the object which state is to be classified, using a processor of a mobile client device, a method is performed to collect a set of data associated with the object for classifying the state of this object using the object state classifier generated by the method according to any one of claims 1 to 18, the method comprises the following steps performed in any sequence:
a step of obtaining a unique identifier of the object which state is to be classified,
wherein the object which state is to be classified belongs to the same type as the said objects from a preformed set of data associated with the plurality of individual objects;
a step of collecting features of an object which state is to be classified,
wherein said features including features of at least two types,
wherein said features being of the same types as the corresponding features from the preformed set of data associated with the plurality of individual objects;
and method comprises the following steps:
a step performed after the implementation of the previous steps, wherein the collected set of data associated with the object which state is to be classified includes said unique identifier of the object which state is to be classified and features of this object is recorded in the memory of the mobile client device;
and, either a step at which the received set of data associated with the object which state is to be classified is transmitted using the communication link to the memory of the server of the object state classification system and using the processor of the system server to obtain indices based on the features from said new set;
or a step, at which the indices are obtained based on the features from said new set using the processor of the mobile client device.

5. Method according to claim 4, **characterized in that** when obtaining said indices using said server processor or said processor of the mobile client device, the method for obtaining indices is performed, the method comprises the following steps:
a step of selecting at least the first type features and the second type features from said data set associated with the object which state is to be classified;
a step of receiving for at least a portion of the collected features from the contribution storage unit the values corresponding to them of the first contribution value and the second contribution value;
a step of summing up all the obtained first contribution values to obtain the first index of the object which state is to be classified;
a step of summing up all the obtained second contribution values to obtain the second index of the object which state is to be classified;
a step of adding the obtained indices to said data set associated with the object which state is to be classified.

6. Method according to claim 5, **characterized in that** one of the following options i) or ii) applies:
option i):
in addition, using said server processor or said processor of the mobile client device,
the following steps are performed:
a step of selecting a portion of said features of the second type to collect a sample of said features of the second type,
wherein said sample consists of said features of the second type, which can be grouped according to a common feature;
a step of obtaining a third index by performing by said server processor or said processor of the mobile client device a training model of classification or clustering model on said sample;
a step of assigning the obtained third index to an object which state is to be classified, and adding the obtained third index to said set of data associated with the object which state is to be classified;
preferably **characterized in that**
the classification model is based on one of:
logistic regression, wherein, when the classification model is a logistic regression, for each of the mentioned features of the second type from the said sample, weights are obtained, on the basis of which the third index is formed,
the support vector method,
the decision tree method,
the random forest method,
the naive Bayes classifier,
the k-nearest neighbor method,
the neural network,
the gradient boosting,
the clustering model is based on one of:
the k-means method,
the method of density-based spatial clustering of applications with noise,
the hierarchical clustering method,
the spectral clustering method;
further preferably **characterized in that** when the classification model is a logistic regression, regularization is applied;
option ii):
in addition, using said processor of the mobile client device, the following steps are performed:
a step of selecting a portion of said features of the second type to collect a sample of said features of the second type,
wherein said sample consists of said features of the second type, which can be grouped according to a common feature;
a step of obtaining for each said features of the second type from said sample of the logistic regression weights from the logistic regression weight storage unit and forming a third index based on the obtained weights;
a step of assigning the obtained third index to an object which state is to be classified, and adding the obtained third index to said set of data associated with the object which state is to be classified.

7. Method according to any one of claims 4 to 6, **characterized in that**, using a processor of a mobile client device, a graphical user interface is generated for obtaining a unique identifier of an object which state is to be classified and features associated with an object which state is to be classified, providing at least:
a first means for obtaining at least said unique identifier of an object which state is to be classified using an input device of a mobile client device;
a second means for obtaining at least said features of a first type using a photo-video camera of a mobile client device;
a third means for obtaining at least said features of a second type using an input device of a mobile client device.

8. Method according to claim 7, **characterized in that** one of the following options i) to iv) applies:
option i):
the first means comprises:
a user data receiving module provided by said graphical user interface, configured to provide at least a graphical region for inputting user data in response to signals generated by said input device and recording the received user data in the memory of the mobile client device;
and a module for generating a unique identifier configured to, in response to recording said user data in said memory:
either using a processor of the mobile client device for generating a unique identifier of the object which state is to be classified, based on said recorded user data and recording said generated unique identifier in the memory of the mobile client device;
or using a processor and a communication means of the mobile client device to transmit said user data to a server of the object state classification system to generate, using a processor of this server based on said user data, a unique identifier of the object which state to be classified, and receive from said server said generated unique identifier and record said generated unique identifier in the memory of the mobile client device;
option ii):
the first means comprises:
an authentication module provided by said graphical user interface, providing at least a graphical region configured to generate, in response to an interaction signal therewith received from said input device, an authentication signal and using a processor and a communication means of the mobile client device transmitting the generated authentication signal to the authentication server, receiving from said authentication server user data and recording the received user data in the memory of the mobile client device;
and a module for generating a unique identifier configured to, in response to recording said user data in said memory:
either using a processor of the mobile client device to generate a unique identifier of the object which state is to be classified based on said recorded user data and writing said generated unique identifier to the memory of the mobile client device,
or using a processor and a communication means of the mobile client device to transmit said user data to a server of the object state classification system to generate, using a processor of this server based on said user data, a unique identifier of the object which state to be classified, and receive from said server said generated unique identifier and record said generated unique identifier in the memory of the mobile client device;
option iii):
the second means comprises:
a first type feature acquisition module provided by said graphical user interface, configured to provide at least a graphical region for generating a signal activating a photo-video camera of the mobile client device,
wherein the first type feature acquisition module is configured to, via said photo-video camera, perform a photo capture of the diagnostic tool and/or perform a video capture of the diagnostic tool to obtain a photo file comprising a photo image of the diagnostic tool and/or a video file comprising a video image of the diagnostic tool and recording said photo file and/or video file in the memory of the mobile client device;
and a first type feature extraction module configured to, in response to the recording of said photo file and/or said video file in said memory:
either using a processor of the mobile client recognition device in said photo image and/or in said video image, of at least one marker associated with at least one feature of the first type, and in response to the recognition of said marker, recording said first type feature associated with said marker in said memory,
either using the processor and the communication means of the mobile client device for transmitting said photo image and/or said video image to the server of the object state classification system for recognizing, using the processor of said server, at least one token associated with at least one feature of the first type, and receiving, from said server, at least one said feature of the first type associated with said token, and recording this received feature of the first type in said memory;
preferably **characterized in that** the diagnostic tool is a medium comprising at least one indicator region that houses an indicator comprising a reagent that, when reacted with a fluid, forms said marker by changing the state of the reagent;
further preferably **characterized in that** the liquid medium is a biomaterial, including saliva, and wherein the change in the state of the reagent is one or a combination of: a change in the color of the reagent, a change in the color intensity of the reagent;
option iv):
the third means comprises:
a second type feature obtaining module provided by said graphical user interface, configured to:
provide a plurality of first graphical regions for generating a second type feature, each of which, in response to an interaction signal received from said input device, generates a second type feature forming signal,
providing at least one second graphical region for generating a second type feature, configured to input user data in response to signals generated by said input device and configured to, in response to input of user data, generate a second type feature generation signal,
wherein each said first graphic region being associated with one second type feature;
wherein the second type feature acquisition module is configured to, in response to said second type feature generation signal obtained using any of said first graphic regions:
either using a processor of a mobile client identification device in a second type feature database associated with a corresponding graphic region, and recording an identified feature of the second type in the memory of the mobile client device,
or using a processor and a communication means of the mobile client device for generating a feature identification signal of the second type and transmitting this identification signal to a server of the object state classification system for identification using a processor of this server in a database of features of the second type of the feature of the second type associated with the corresponding graphic region, and receiving from said server said identified feature of the second type and recording this received identified feature of the second type in the memory of the mobile client device;
the second type feature acquisition module is configured, in response to said second type feature generation signal obtained using any of said second graphic regions:
either using the processor of the mobile client device to calculate the second type feature and write the calculated second type feature to the memory of the mobile client device,
or using the processor and the communication means of the mobile client device to generate the second type feature calculation signal and transmit this calculation signal to the server of the object state classification system for calculating the second type feature using the processor of this server, and receiving from said server of said calculated feature of the second type and recording this obtained calculated feature of the second type in the memory of the mobile client device.

9. Method according to claim 7 or claim 8, **characterized in that**, after obtaining a unique identifier of the object which state is to be classified, and said features of the first type and features of the second type:
either, using the processor of the mobile client device,
the said set of data associated with the object which state is to be classified is formed,
and the said generated set of data associated with the object which state is to be classified is recorded in the memory of the object's state classification device;
or, using the processor and the communication means of the mobile client device, the said identifier and features are transmitted to the server of the object's state classification system and, using the processor of this server, the said set of data associated with the object which state is to be classified is formed,
and the said generated set of data associated with the object which state is to be classified is recorded in the memory of the server of the object's state classification system;
preferably **characterized in that** the device for classifying the state of an object is a mobile client device or a server of the system for classifying the state of an object.

10. Method according to claim 6, **characterized in that** further, by means of the processor of the computer device, a step of excluding from said set of data associated with the object which state is to be classified, said features of the second type that have fallen into said selection of features of the second type, is performed, preferably **characterized in that**, using a processor of a mobile client device, a graphical user interface is generated for obtaining a unique identifier of an object which state is to be classified and features associated with an object which state is to be classified, providing at least:
a first means for obtaining at least said unique identifier of an object which state is to be classified using an input device of a mobile client device;
a second means for obtaining at least said features of a first type using a photo-video camera of a mobile client device;
a third means for obtaining at least said features of a second type using an input device of a mobile client device.

11. Method according to claim 10, **characterized in that** one of the following options i) to iv) applies:
option i):
the first means comprises:
a user data receiving module provided by said graphical user interface, configured to provide at least a graphical region for inputting user data in response to signals generated by said input device and recording the received user data in the memory of the mobile client device;
and a module for generating a unique identifier configured to, in response to recording said user data in said memory:
either using a processor of the mobile client device for generating a unique identifier of the object which state is to be classified, based on said recorded user data and recording said generated unique identifier in the memory of the mobile client device;
or using a processor and a communication means of the mobile client device to transmit said user data to a server of the object state classification system to generate, using a processor of this server based on said user data, a unique identifier of the object which state to be classified, and receive from said server said generated unique identifier and record said generated unique identifier in the memory of the mobile client device;
option ii):
the first means comprises:
an authentication module provided by said graphical user interface, providing at least a graphical region configured to generate, in response to an interaction signal therewith received from said input device, an authentication signal and using a processor and a communication means of the mobile client device transmitting the generated authentication signal to the authentication server, receiving from said authentication server user data and recording the received user data in the memory of the mobile client device;
and a module for generating a unique identifier configured to, in response to recording said user data in said memory:
either using a processor of the mobile client device to generate a unique identifier of the object which state is to be classified based on said recorded user data and writing said generated unique identifier to the memory of the mobile client device,
or using a processor and a communication means of the mobile client device to transmit said user data to a server of the object state classification system to generate, using a processor of this server based on said user data, a unique identifier of the object which state to be classified, and receive from said server said generated unique identifier and record said generated unique identifier in the memory of the mobile client device;
option iii):
the second means comprises:
a first type feature acquisition module provided by said graphical user interface, configured to provide at least a graphical region for generating a signal activating a photo-video camera of the mobile client device,
wherein the first type feature acquisition module is configured to, via said photo-video camera, perform a photo capture of the diagnostic tool and/or perform a video capture of the diagnostic tool to obtain a photo file comprising a photo image of the diagnostic tool and/or a video file comprising a video image of the diagnostic tool and recording said photo file and/or video file in the memory of the mobile client device;
and a first type feature extraction module configured to, in response to the recording of said photo file and/or said video file in said memory:
either using a processor of the mobile client recognition device in said photo image and/or in said video image, of at least one marker associated with at least one feature of the first type, and in response to the recognition of said marker, recording said first type feature associated with said marker in said memory,
either using the processor and the communication means of the mobile client device for transmitting said photo image and/or said video image to the server of the object state classification system for recognizing, using the processor of said server, at least one token associated with at least one feature of the first type, and receiving, from said server, at least one said feature of the first type associated with said token, and recording this received feature of the first type in said memory;
preferably **characterized in that** the diagnostic tool is a medium comprising at least one indicator region that houses an indicator comprising a reagent that, when reacted with a fluid, forms said marker by changing the state of the reagent;
further preferably **characterized in that** the liquid medium is a biomaterial, including saliva, and wherein the change in the state of the reagent is one or a combination of: a change in the color of the reagent, a change in the color intensity of the reagent;
option iv):
the third means comprises:
a second type feature obtaining module provided by said graphical user interface, configured to:
provide a plurality of first graphical regions for generating a second type feature, each of which, in response to an interaction signal received from said input device, generates a second type feature forming signal,
providing at least one second graphical region for generating a second type feature, configured to input user data in response to signals generated by said input device and configured to, in response to input of user data, generate a second type feature generation signal,
wherein each said first graphic region being associated with one second type feature;
wherein the second type feature acquisition module is configured to, in response to said second type feature generation signal obtained using any of said first graphic regions:
either using a processor of a mobile client identification device in a second type feature database associated with a corresponding graphic region, and recording an identified feature of the second type in the memory of the mobile client device,
or using a processor and a communication means of the mobile client device for generating a feature identification signal of the second type and transmitting this identification signal to a server of the object state classification system for identification using a processor of this server in a database of features of the second type of the feature of the second type associated with the corresponding graphic region, and receiving from said server said identified feature of the second type and recording this received identified feature of the second type in the memory of the mobile client device;
the second type feature acquisition module is configured, in response to said second type feature generation signal obtained using any of said second graphic regions:
either using the processor of the mobile client device to calculate the second type feature and write the calculated second type feature to the memory of the mobile client device,
or using the processor and the communication means of the mobile client device to generate the second type feature calculation signal and transmit this calculation signal to the server of the object state classification system for calculating the second type feature using the processor of this server, and receiving from said server of said calculated feature of the second type and recording this obtained calculated feature of the second type in the memory of the mobile client device.

12. A method for classifying the state of an object performed using a processor of a computer device, the method comprising performing the steps of:
a step of collecting a set of data associated with an object which state is to be classified by means of the method according to any one of claim 3, option iv) to claim 11;
a step of classifying an object which state is to be classified to one of a plurality of groups by means of a classifier of the state of the object obtained by the method according to any one of claims 1 to claim 3, option iii),
wherein each of the plurality of mentioned groups corresponding to one state of the object.

13. A device for generating an object state classifier is provided, comprising at least:
a processor;
a memory comprising program code that, when executed by the processor, causes the processor to perform the actions of the method according to any one of claims 1 to 11,
wherein said device is preferably a mobile client device for collecting a set of data associated with an object which state is to be classified by a classifier obtained by the method according to any one of claims 1 to 11, further comprising at least:
an input device;
a photo-video camera;
a communication means;
an output device;
and wherein said memory comprising program code which, when executed by the processor, causes the processor to perform actions of a method for obtaining a set of data associated with an object which state is to be classified, the method being method according to any one of claim 3, option iv) to claim 11.

14. A computer-readable storage media are provided comprising program codes that, when executed by a processor of a computer device, cause the processor to perform the actions of the method according to any one of claims 1 to 12.

15. A diagnostic tool which is a medium comprising at least one indicator region that houses an indicator comprising a reagent that, when reacted with a fluid, forms said marker by changing the state of the reagent, the marker is designed to be recognized thereof by the camera of the device according to claim 13;
preferably **characterized in that** the liquid medium is a biomaterial, including saliva, and wherein the change in the state of the reagent is one or a combination of: a change in the color of the reagent, a change in the color intensity of the reagent.
